(19) Europäisches Patentamt
European Patent Office
Office européen des brevets

(11) **EP 4 614 456 A1**

(12) **EUROPEAN PATENT APPLICATION**
published in accordance with Art. 153(4) EPC

(43) Date of publication:
**10.09.2025 Bulletin 2025/37**

(21) Application number: 24763255.7

(22) Date of filing: **01.03.2024**

(51) International Patent Classification (IPC):
*G06V 10/764* (2022.01)  *G06F 18/214* (2023.01)
*G06N 3/08* (2023.01)  *G06V 10/82* (2022.01)

(52) Cooperative Patent Classification (CPC):
**G06V 10/82; G06F 18/214; G06N 3/045;**
**G06N 3/047; G06N 3/08;** G06V 10/778

(86) International application number:
**PCT/CN2024/079587**

(87) International publication number:
**WO 2024/179575 (06.09.2024 Gazette 2024/36)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **02.03.2023 CN 202310237098**

(71) Applicant: **Tencent Technology (Shenzhen)**
**Company Limited**
**Shenzhen, Guangdong 518057 (CN)**

(72) Inventors:
• **YIN, Bangjie**
**Shenzhen, Guangdong 518057 (CN)**
• **YAO, Taiping**
**Shenzhen, Guangdong 518057 (CN)**
• **ZHANG, Keyue**
**Shenzhen, Guangdong 518057 (CN)**
• **LI, Bo**
**Shenzhen, Guangdong 518057 (CN)**
• **DING, Shouhong**
**Shenzhen, Guangdong 518057 (CN)**

(74) Representative: **Reddie & Grose LLP**
**The White Chapel Building**
**10 Whitechapel High Street**
**London E1 8QS (GB)**

(54) **DATA PROCESSING METHOD, AND DEVICE AND COMPUTER-READABLE STORAGE MEDIUM**

(57) Provided are a data processing method, and a device and a computer-readable storage medium. The method comprises: inputting a sampling sample image in A sample image sets and an error category label among A category labels into an image recognition model, so as to generate a first probability vector of the sampling sample image in respect of the A category labels, wherein the error category label is different from a category label corresponding to a sample image set to which the sampling sample image belongs; and adjusting the sampling sample image according to a first probability element, which indicates the error category label, among A probability elements in the first probability vector, so as to obtain an adversarial sample image corresponding to the sampling sample image, wherein a category prediction result, which is obtained by means of the image recognition model performing category prediction on the adversarial sample image, is the error category label.

Obtain A sample image sets and an image recognition model, A being a positive integer greater than 1, each of the A sample image sets corresponding to one of A different class labels, the image recognition model being obtained through pretraining based on the A sample image sets, and the A class labels including a wrong class label — S101

Obtain a sampled sample image from the A sample image sets, and input the sampled sample image and the wrong class label into the image recognition model, to generate a first probability vector of the sampled sample image for the A class labels, the wrong class label being different from a class label corresponding to a sample image set to which the sampled sample image belongs, the first probability vector including A probability elements, each of the A probability elements indicating one of the A class labels, and one probability element being used to represent a probability that the sampled sample image belongs to a class label indicated by the probability element — S102

Obtain, from the A probability elements in the first probability vector, a first probability element indicating the wrong class label, and adjust the sampled sample image based on the first probability element, to obtain an adversarial sample image corresponding to the sampled sample image, a class prediction result obtained by performing class prediction on the adversarial sample image using the image recognition model being the wrong class label — S103

FIG. 3

**Description**

RELATED APPLICATION

This application claims priority to Chinese Patent Application No. 202310237098.1, filed with the China National Intellectual Property Administration on March 02, 2023 and entitled "DATA PROCESSING METHOD, AND DEVICE AND COMPUTER-READABLE STORAGE MEDIUM", which is incorporated by reference in its entirety.

FIELD OF THE TECHNOLOGY

This application relates to the field of Internet technologies, and in particular, to a data processing method, a device, a computer-readable storage medium.

BACKGROUND OF THE DISCLOSURE

In service scenarios such as an image recognition scenario, an image classification scenario, an image recommendation scenario, and a video attribute recognition scenario, it is crucial to correctly determine a class label for an image or video frame (that is, correctly recognize a class of the image or video frame).

Mainstream image recognition methods are mainly machine learning (ML)-based methods. To be specific, an initial image recognition model is trained with a training sample set, to obtain an image recognition model. Clearly, training data can determine class label recognition accuracy and recognition generalization performance of the image recognition model. In the related art, training data is augmented directly by superimposing randomly generated noise to training sample images. Clearly, the randomly generated noise and the training sample image are mutually independent data, so that a noise feature in the training sample image superimposed with the random noise and a feature of the image are mutually independent, and the image recognition model can easily distinguish the noise feature from the feature of the image. Therefore, using training samples augmented using a related technology can only enlarge the amount of training data but cannot improve diversity of the training data. As a result, training the image recognition model again with the training samples augmented using the related technology cannot ensure higher class label recognition accuracy and higher recognition generalization performance of a trained image recognition model.

SUMMARY

Embodiments of this application provide a data processing method, a device, and a computer-readable storage medium, to improve class label recognition accuracy and recognition generalization performance.

An aspect of the embodiments of this application provides a data processing method, including:

obtaining N image sets, N being a positive integer greater than 1, the N image sets each corresponding to one of N different image class labels;

inputting a sample image and a first reference image class label into an image recognition model, to generate a first probability vector, the sample image being selected from a sample image set being one of the N image sets, the first reference image class label being selected from the N image class labels and different from a sample image class label corresponding to the sample image set, the first probability vector comprising N probability elements each indicating a probability that the sample image corresponds to the respective one of the N image class labels; and

obtaining, from the N probability elements, a first probability element corresponding to the first reference class label, and adjusting the sample image based on the first probability element, to obtain an adversarial sample image, whose class prediction result obtained using the image recognition model being the first reference class label.

An aspect of the embodiments of this application provides a data processing method, including:

obtaining a target image, and inputting the target image into an optimized image recognition model, the optimized image recognition model being obtained by performing optimization training on an image recognition model based on a mixed sample training set, the mixed sample training set comprising N sample image sets, N different class labels, a second reference class label, and an adversarial sample image, each of the N sample image sets corresponding to one of the N different class labels, the N sample image sets comprising a sample image, the second reference class label belonging to the N different class labels, N being a positive integer greater than 1, the image recognition model being obtained through pre-training based on the N sample image sets, the adversarial sample image being obtained by adjusting the sample image based on a first probability element which indicates a first reference class label and is comprised in N probability elements in a first probability vector, the first probability vector being generated for the sample image using the image recognition model, the first reference class label being different from a class label corresponding to a sample image set to which the sample image belongs, the second reference class label being the class label corresponding to the sample image set to which the sample image belongs, the first probability vector comprising the N probability elements, each of the N probability elements indicating one of the N different class labels, one probability element representing a probability that the sample image corresponding to a class label indicated by the probability element, and a class prediction result obtained by performing class prediction on the adversarial sample image using the image recognition model being the first reference class label;

generating a target probability vector of the target image for the N class labels using the optimized image recognition model; and

determining a class label corresponding to a maximum probability element in the target probability vector as a class prediction result for the target image.

An aspect of the embodiments of this application provides a data processing apparatus, including:

a data obtaining module, configured to obtain N image sets, N being a positive integer greater than 1, the N image sets each corresponding to one of N different image class labels;

a first input module, configured to input a sample image and a first reference image class label into an image recognition model, to generate a first probability vector, the sample image being selected from a sample image set being one of the N image sets, the first reference image class label being selected from the N image class labels and different from a sample image class label corresponding to the sample image set, the first probability vector comprising N probability elements each indicating a probability that the sample image corresponds to the respective one of the N image class labels; and

a first adjustment module, configured to obtain, from the N probability elements, a first probability element corresponding to the first reference class label, and adjust the sample image based on the first probability element, to obtain an adversarial sample image, whose class prediction result obtained using the image recognition model being the first reference class label.

The first adjustment module is specifically configured to generate a negative probability element corresponding to the first probability element, perform summation processing on the negative probability element and a maximum probability element in the first probability vector, to obtain a label loss value of the sampled sample image for the wrong class label, and adjust the sampled sample image based on the label loss value, to obtain the adversarial sample image corresponding to the sampled sample image.

When configured to adjust the sampled sample image based on the label loss value, to obtain the adversarial sample image corresponding to the sampled sample image, the first adjustment module is specifically configured to generate an initial gradient value for the sampled sample image based on the label loss value, obtain a numerical sign of the initial gradient value, generate, based on the numerical sign, a signed unit value corresponding to the initial gradient value, perform product processing on an initial learning rate and the signed unit value to obtain a first to-be-clipped value, perform clipping processing on the first to-be-clipped value using a first clipping interval generated based on an attack intensity, to obtain a gradient value for adjusting the sampled sample image, perform difference calculation processing on the sampled sample image and the gradient value to obtain a second to-be-clipped value, and perform clipping processing on the second to-be-clipped value using a second clipping interval generated based on a pixel level, to obtain the adversarial sample image corresponding to the sampled sample image.

The first adjustment module includes:

a first adjustment unit, configured to adjust the sampled sample image based on the first probability element, to obtain an initial adversarial sample image corresponding to the sampled sample image;

a first generation unit, configured to input the wrong class label and the initial adversarial sample image into the image recognition model, and generate a second probability vector of the initial adversarial sample image for the A class labels using the image recognition model;

a first obtaining unit, configured to obtain a second probability element for the wrong class label from A probability elements included in the second probability vector; and

a first adjustment unit, configured to continue to adjust the initial adversarial sample image based on the second probability element if the second probability element does not satisfy a boundary constraint or the class prediction result obtained by performing class prediction on the adversarial sample image is not the wrong class label.

The first obtaining unit is further configured to determine, if the second probability element satisfies a boundary constraint or the class prediction result obtained by performing class prediction on the adversarial sample image is the wrong class label, the initial adversarial sample image as the adversarial sample image corresponding to the sampled sample image, the second probability element being a maximum value among the A probability elements comprised in the second probability vector in a case that the class prediction result is the wrong class label.

The first obtaining unit is further configured to compare the second probability element with a probability constraint value, the probability constraint value being a reciprocal of A.

The first obtaining unit is further configured to determine, if the second probability element is less than the probability constraint value, that the second probability element does not satisfy the boundary constraint.

The first obtaining unit is further configured to determine, if the second probability element is greater than or equal to the probability constraint value, that the second probability element satisfies the boundary constraint.

The data processing apparatus further includes:

a second input module, configured to input the A sample image sets, the A class labels, a correct class label, and the adversarial sample image into the image recognition model, the correct class label being the class label corresponding to the sample image set to which the sampled sample image belongs;

the second input module being further configured to generate, using the image recognition model, first predicted classes respectively corresponding to the A sample image sets and a second predicted class corresponding to the adversarial sample image; and

a second adjustment module, configured to generate a first loss value based on the first predicted classes and the A class labels, generate a second loss value based on the second predicted class and the correct class label, and adjust a parameter in the image recognition model based on the first loss value and the second loss value, to obtain an optimized image recognition model, a class prediction result obtained by performing class prediction on the adversarial sample image using the optimized image recognition model being the correct class label.

The A sample image sets including the sample image set $C_b$, b being a positive integer, and b being less than or equal to A. The first input module includes:

a first determining unit, configured to determine a sampling ratio, and perform sampling processing on a sample image in the sample image set $C_b$ based on the sampling ratio, to obtain the sampled sample image; and

a second obtaining unit, configured to obtain, from the A class labels, a class label different from a class label for the sample image set $C_b$, and determine the obtained class label as the wrong class label.

The data obtaining module includes:

a third obtaining unit, configured to obtain the A sample image sets, and separately input the A class labels and the A sample image sets into an initial image recognition model;

a second generation unit, configured to generate, using the initial image recognition model, predicted initial classes respectively corresponding to the A sample image sets;

a second determining unit, configured to determine, based on the predicted initial classes and the A class labels, class loss values respectively corresponding to the A sample image sets;

a third determining unit, configured to determine, based on the class loss values respectively corresponding to the A sample image sets, a total loss value corresponding to the initial image recognition model; and

a second adjustment unit, configured to adjust a parameter in the initial image recognition model based on the total loss value, to obtain the image recognition model, a class prediction result obtained by performing class prediction on the sample image set $C_b$ using the image recognition model being the class label for the sample image set $C_b$, the A sample image sets including the sample image set $C_b$, b being a positive integer, and b being less than or equal to A.

The third obtaining unit includes:

an image obtaining subunit, configured to obtain A original image sets, and input all the A original image sets into an object detection model, each of the A original image sets corresponding to one of A different pieces of class information, the A original image sets including an original image set $D_b$, the original image set $D_b$ including an original image $E_f$, f being a positive integer, and f being less than or equal to a total quantity of original images in the original image set $D_b$;

a second determining subunit, configured to determine regional coordinates of a key region in the original image $E_f$ using the object detection model, and generate, based on the regional coordinates, a to-be-labeled sample image corresponding to the original image $E_f$;

a third determining subunit, configured to determine a to-be-labeled sample image corresponding to each original image in the original image set $D_b$ as a to-be-labeled sample image set; and

a fourth determining subunit, configured to generate a class label $H_b$ based on class information corresponding to the original image set $D_b$, and determine a to-be-labeled sample image set labeled with the class label $H_b$ as the sample image set $C_b$.

The second determining subunit includes:

a third processing subunit, configured to generate, based on the regional coordinates, an initial detection box including the key region, and perform expansion processing on the initial detection box to obtain a detection box including a target object, the key region belonging to the target object;

a fourth processing subunit, configured to obtain, from the detection box, a to-be-scaled image including the target object, obtain a first image size, and perform scaling processing on the to-be-scaled image based on the first image size, to obtain a to-be-cropped image; and

a fifth processing subunit, configured to obtain a second image size, and perform cropping processing on the to-be-cropped image based on the second image size, to obtain the to-be-labeled sample image corresponding to the original image $E_f$, the second image size being smaller than the first image size.

An aspect of the embodiments of this application provides a data processing apparatus, including:

an image obtaining module, configured to obtain a target image, and input the target image into an optimized image recognition model, the optimized image recognition model being obtained by performing optimization training on an image recognition model based on a mixed sample training set, the mixed sample training set comprising N sample image sets, N different class labels, a second reference class label, and an adversarial sample image, each of the N sample image sets corresponding to one of the N different class labels, the N sample image sets comprising a sample image, the second reference class label belonging to the N different class labels, N being a positive integer greater than 1, the image recognition model being obtained through pre-training based on the N sample image sets, the adversarial sample image being obtained by adjusting the sample image based on a first probability element which indicates a first reference class label and is comprised in N probability elements in a first probability vector, the first probability vector being generated for the sample image using the image recognition model, the first reference class label being different from a class label corresponding to a sample image set to which the sample image belongs, the second reference class label being the class label corresponding to the sample image set to which the sample image belongs, the first probability vector comprising the N probability elements, each of the N probability elements indicating one of the N different class labels, one probability element representing a probability that the sample image corresponding to a class label indicated by the probability element, and a class prediction result obtained by performing class prediction on the adversarial sample image using the image recognition model being the first reference class label;

a vector generation module, configured to generate a target probability vector of the target image for the N class labels using the optimized image recognition model; and

a class determining module, configured to determine a class label corresponding to a maximum probability element in the target probability vector as a class prediction result for the target image.

An aspect of this application provides a computer device, including a processor, a memory, and a network interface.

The processor is connected to the memory and the network interface. The network interface is configured to provide a data communication function. The memory is configured to store a computer program. The processor is configured to invoke the computer program, to cause the computer device to perform the method in the embodiments of this application.

An aspect of the embodiments of this application provides a computer-readable storage medium, having a computer program stored therein. The computer program is suitable for a processor to load to implement the method in the embodiments of this application.

An aspect of the embodiments of this application provides a computer program product, including a computer program. The computer program is stored in a computer-readable storage medium. A processor of a computer device reads the computer program from the computer-readable storage medium. The processor executes the computer program, to cause the computer device to perform the method in the embodiments of this application.

In the embodiments of this application, the computer device may obtain the A sample image sets and the image recognition model. Each of the A sample image sets corresponds to one of the A different class labels, and the image recognition model is obtained through pre-training based on the A sample image sets, so that the image recognition model can accurately determine a class label for a sample image in the A sample image sets. Further, the computer device obtains the sampled sample image from the A sample image sets, and inputs the wrong class label and the sampled sample image into the image recognition model. The wrong class label belongs to the A class labels. The wrong class label is different from the class label corresponding to the sample image set to which the sampled sample image belongs. The first probability vector of the sampled sample image for the A class labels may be generated using the image recognition model. The first probability vector includes the A probability elements. Each of the A probability elements indicates one of the A class labels. One probability element is used to represent a probability that the sampled sample image belongs to a class label indicated by the probability element. Since the image recognition model can accurately determine the class label for the sample image in the A sample image sets, a probability element in the first probability vector that indicates the correct class label is maximum, or in other words, the probability element indicating the correct class label is far greater than the first probability element indicating the wrong class label. The correct class label is the class label corresponding to the sample image set to which the sampled sample image belongs. Further, the computer device may adjust the sampled sample image based on the first probability element, to obtain the adversarial sample image corresponding to the sampled sample image. The class prediction result obtained by performing class prediction on the adversarial sample image using the image recognition model is the wrong class label. In other words, the sampled sample image is adjusted, so that the image recognition model can misdetermine a class label for the adversarial sample image. Based on the foregoing, the embodiments of this application propose a method for generating an adversarial sample image. According to the method, the adversarial sample image misrecognized by the image recognition model may be generated. The adversarial sample image can improve sample diversity of a training set for optimization training of the image recognition model. The training set with diversified samples can improve accuracy of optimization training of the image recognition model, thereby improving class label recognition accuracy and recognition generalization performance of a trained image recognition model.

BRIEF DESCRIPTION OF THE DRAWINGS

To describe technical solutions in embodiments of this application or the related art more clearly, the following briefly introduces the accompanying drawings required for describing the embodiments or the related art. Apparently, the accompanying drawings in the following description show only some embodiments of this application, and a person of ordinary skill in the art may still derive other drawings from these accompanying drawings without creative efforts.

FIG. 1 is a schematic diagram of an architecture of a system according to an embodiment of this application.

FIG. 2a is a schematic diagram 1 of a data processing scenario according to an embodiment of this application.

FIG. 2b is a schematic diagram 2 of a data processing scenario according to an embodiment of this application.

FIG. 3 is a schematic flowchart 1 of a data processing method according to an embodiment of this application.

FIG. 4 is a schematic diagram of a classification interface trained with clean sample data according to an embodiment of this application.

FIG. 5 is a schematic diagram of a classification interface trained with first mixed sample data according to an embodiment of this application.

FIG. 6 is a schematic diagram of a classification interface trained with second mixed sample data according to an embodiment of this application.

FIG. 7 is a schematic flowchart 2 of a data processing method according to an embodiment of this application.

FIG. 8 is a schematic flowchart 3 of a data processing method according to an embodiment of this application.

FIG. 9 is a schematic diagram 1 of a structure of a data processing apparatus according to an embodiment of this application.

FIG. 10 is a schematic diagram 2 of a structure of a data processing apparatus according to an embodiment of this application.

FIG. 11 is a schematic diagram of a structure of a computer device according to an embodiment of this application.

DESCRIPTION OF EMBODIMENTS

The following clearly and completely describes the technical solutions in the embodiments of this application with reference to the accompanying drawings in the embodiments of this application. It is clear that the described embodiments are merely some but not all of the embodiments of this application. All other embodiments obtained by a person of ordinary skill in the art based on the embodiments of this application without creative efforts shall fall within the protection scope of this application.

For ease of understanding, some nouns are first briefly described as follows.

Artificial intelligence (AI) is a theory, method, technology, and application system that uses a digital computer or a machine controlled by a digital computer to simulate, extend, and expand human intelligence, perceive an environment, acquire knowledge, and use knowledge to obtain an optimal result. In other words, AI is a comprehensive technology in computer science and attempts to understand the essence of intelligence and produce a new intelligent machine that can react in a manner similar to human intelligence. AI is to study the design principles and implementation methods of various intelligent machines, to enable the machines to have the functions of perception, reasoning, and decision-making.

The AI technology is a comprehensive discipline, and relates to a wide range of fields including both hardware-level technologies and software-level technologies. The basic AI technologies generally include technologies such as a sensor, a dedicated AI chip, cloud computing, distributed storage, a big data processing technology, an operating/interaction system, and electromechanical integration. AI software technologies mainly include several major directions such as a computer vision (CV) technology, a voice processing technology, a natural language processing technology, ML/deep learning, self driving, and smart transportation.

The CV technology is a science that studies how to use a machine to "see", and furthermore, is machine vision that a camera and a computer are used for replacing human eyes to perform recognition, measurement, and the like on a target, and further perform graphic processing, so that the computer processes the target into an image more suitable for human eyes to observe, or an image transmitted to an instrument for detection. As a scientific discipline, CV studies related theories and technologies and attempts to establish an AI system that can obtain information from images or multidimensional data. The computer vision technology generally includes technologies such as image processing, image recognition, image semantic understanding, image retrieval, optical character recognition (OCR), video processing, video semantic understanding, video content/behavioral recognition, three-dimensional object reconstruction, a three-dimensional (3D) technology, virtual reality, augmented reality, simultaneous localization and mapping, self driving, and smart transportation. In the embodiments of this application, the CV technology may be used to recognize a class label (for example, a human, a cat, a dog, a real human, a paper man, or a human mold) in an image.

ML is a multi-field interdiscipline, and relates to a plurality of disciplines such as the probability theory, statistics, the approximation theory, convex analysis, and the algorithm complexity theory. ML specializes in studying how a computer simulates or implements a human learning behavior to obtain new knowledge or skills, and reorganize an existing knowledge structure, to keep improving its performance. ML is the core of AI, is a basic way to make the computer intelligent, and is applied to various fields of AI. ML and deep learning generally include technologies such as an artificial neural network, a belief network, reinforcement learning, transfer learning, inductive learning, and learning from demonstrations. In the embodiments of this application, both an image recognition model and an object detection model are ML-based AI models. The image recognition model can be used to recognize an image. The object detection model can be used to detect a key region of a target object in the image.

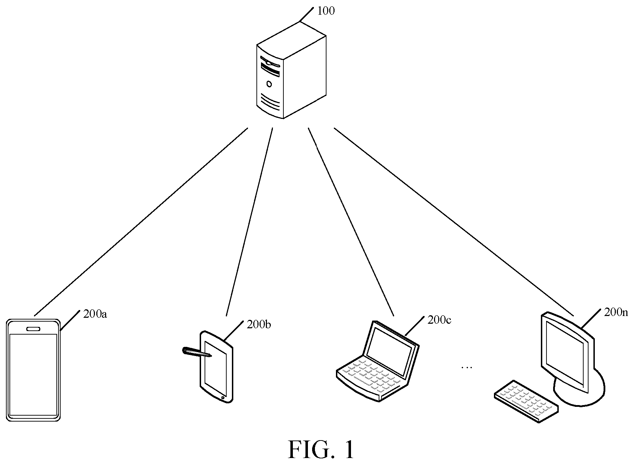

Refer to FIG. 1. FIG. 1 is a schematic diagram of an architecture of a system according to an embodiment of this application. As shown in FIG. 1, the system may include a service server 100 and a terminal device cluster. The terminal device cluster may include a terminal device 200a, a terminal device 200b, a terminal device 200c, ..., and a terminal device 200n. The system may include one or more terminal devices. The quantity of terminal devices is not limited in this embodiment.

There is a communication connection between the terminal devices. For example, there is a communication connection between the terminal device 200a and the terminal device 200b, and there is a communication connection between the terminal device 200a and the terminal device 200c. In addition, there may be a communication connection between any terminal device in the terminal device cluster and the service server 100. For example, there is a communication connection between the terminal device 200a and the service server 100. A connection manner for the communication connection is not limited. Wired communication may be used for direct or indirect connection, wireless communication may be used for direct or indirect connection, or another manner may be used. This is not limited herein in this application.

An application client may be installed on each terminal device in the terminal device cluster shown in FIG. 1, and when run in each terminal device, the application client may perform data exchange with the service server 100 shown in FIG. 1, that is, the foregoing communication connection. The application client may be an application client with a target image recognition function, for example, a video application, a livestreaming application, a social application, an instant messaging application, a game application, a music application, a shopping application, a novel application, or a browser.

The application client may be an independent client, or an embedded subclient integrated into a specific client (for example, a social client, an educational client, or a multimedia client). This is not limited herein. Taking the shopping application as an example, the service server 100 may be a set including a plurality of servers such as a background server corresponding to the shopping application, and a data processing server. Therefore, each terminal device may perform data transmission with the service server 100 via an application client corresponding to the shopping application. For example, each terminal device may upload a target image to the service server 100 via the application client of the shopping application, so that the service server 100 can determine a class label for the target image.

Related data such as user information (for example, the target image) is involved in a specific implementation of this application. When the embodiments of this application are applied to a specific product or technology, a license or consent of a user is required to be obtained, and collection, use, and processing of the related data are required to comply with related laws and regulations and standards of related countries and regions.

For ease of subsequent understanding and description, in this embodiment of this application, one terminal device may be selected from the terminal device cluster shown in FIG. 1 as a target terminal device. For example, the terminal device 200a is used as the target terminal device. When obtaining an image recognition model and receiving a model optimization instruction for the image recognition model, the terminal device 200a may send a model optimization request for the image recognition model to the service server 100 via the application client. The image recognition model is a neural network model for recognizing an image and determining class information of the image.

Further, after the service server 100 receives the model optimization request sent by the terminal device 200a, the service server 100 may obtain A sample image sets and the image recognition model. The A sample image sets are a plurality of sample image sets. The A sample image sets respectively correspond to different class labels. Therefore, the quantity of class labels may also be A. In other words, each of the A sample image sets corresponds to one of A different class labels. One class label is used to indicate one piece of class information. Therefore, the A sample image sets respectively correspond to different class information. The class information is not limited in this embodiment of this application, and can be set based on an actual application scenario. In some embodiments, the class information may be object information. In this case, the A sample image sets respectively correspond to different object information. For example, object information for a first sample image set among the A sample image sets is a cat (that is, each sample image in the first sample image set is related to the cat), and object information for a second sample image set among the A sample image sets is a dog (that is, each sample image in the second sample image set is related to the dog). In some embodiments, the class information may be object carrier information. In this case, the A sample image sets may respectively correspond to same or different object information, but the A sample image sets respectively correspond to different object carrier information. For example, in a key feature recognition scenario, object carrier information for a third sample image set among the A sample image sets is a screen-captured image, object carrier information for a fourth sample image set among the A sample image sets is a key feature mold, and object carrier information for a fifth sample image set among the A sample image sets is paper.

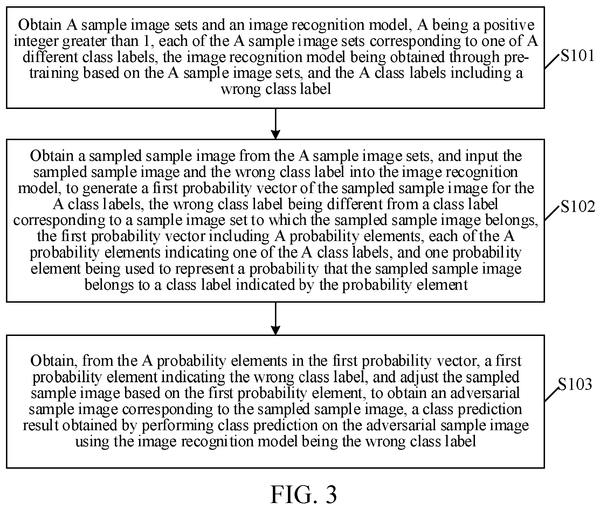

A manner in which the service server 100 obtains the A sample image sets and the image recognition model is not limited in this embodiment of this application, and may be set based on the actual application scenario. For example, the model optimization request sent by the terminal device 200a carries the A sample image sets or the image recognition model, or carries both the A sample image sets and the image recognition model. For example, the A sample image sets and the image recognition model are obtained from a database. For example, the A sample image sets and the image recognition model are obtained from a blockchain network. In addition, the image recognition model is obtained through pre-training based on the A sample image sets. For a generation process of the image recognition model, details are not described herein, and reference is made to descriptions of operation S101 in the following embodiment corresponding to FIG. 3.

For ease of description and understanding, a sample image set C1 among the A sample image sets is used as an example for description in this embodiment of this application. A processing process of a remaining sample image set among the A sample image sets is the same as the following processing process of the sample image set C1. The service server 100 obtains a sampled sample image (randomly or through polling) from the sample image set C1, and further obtains a wrong class label from the A class labels. The wrong class label belongs to a class label (which may be referred to as a remaining class label) other than a class label for the sample image set C1 among the A class labels. Specifically, a class label randomly obtained from the remaining class label may be determined as the wrong class label. For example, the wrong class label is a class label for a sample image set C2. Further, the wrong class label and the sampled sample image are input into the image recognition model. The wrong class label and the sampled sample image may be respectively input into the image recognition model as two pieces of mutually independent data, and there is a mapping relationship between the wrong class label and the sampled sample image. Alternatively, the wrong class label is added into a file header or an end of file of the sampled sample image, and the sampled sample image carrying the wrong class label is further input into the image recognition model. Further, the service server 100 generates a first probability vector of the sampled sample image for the A class labels using the image recognition model. The first probability vector includes A probability elements. Each of the A probability elements indicates one of the A class labels. One probability element is used to represent a probability that the sampled sample image belongs to a class label indicated by the probability element. The first probability vector has A vector dimensions. To be specific, an element (also referred to as a probability element in this embodiment of this application) in one vector dimension may represent a predicted probability value for one class label. In other words, a larger value of a probability element indicates a higher probability that the sampled sample image belongs to a class label indicated by the probability element. Therefore, a class label indicated by a probability element with a maximum value in the first probability vector may generally be determined as a class prediction result for the sampled sample image. Therefore, the service server 100 may obtain a first probability element in the first probability vector that indicates the wrong class label, and further adjust the sampled sample image based on the first probability element, to obtain an adversarial sample image corresponding to the sampled sample image. A class prediction result obtained by performing class prediction on the adversarial sample image using the image recognition model is the wrong class label. In other words, the image recognition model cannot accurately recognize the adversarial sample image, and further obtains a wrong class. For example, the sampled sample image is an image including a cat, whose class label is a label corresponding to the cat, and a sampled sample image carrying a label (that is, the wrong class label) corresponding to a dog is adjusted to obtain an adversarial sample image corresponding to the sampled sample image. An optimizer for the image recognition model can accurately determine that the adversarial sample image is an image including the cat, but the image recognition model may misdetermine that the adversarial sample image is an image including the dog.

Through the foregoing process, the service server 100 may generate the adversarial sample image, and subsequently continue to perform optimization training on the image recognition model based on the A sample image sets, a correct class label, and the adversarial sample image, to obtain an optimized image recognition model. The correct class label is the class label for the sample image set C1. A model loss is calculated based on a predicted class label for the adversarial sample image and the correct class label when the image recognition model is trained, so that the trained optimized image recognition model can accurately recognize the adversarial sample image, and further accurately recognize that the class prediction result for the adversarial sample image is the correct class label. Therefore, the optimized image recognition model can specifically have a higher anti-interference capability.

The service server 100 subsequently generates a model optimization complete message for the optimized image recognition model, and sends the model optimization complete message to the terminal device 200a. After receiving the model optimization complete message sent by the service server 100, the terminal device 200a may obtain the optimized image recognition model. A manner in which the terminal device 200a obtains the optimized image recognition model is not limited in this embodiment of this application, and may be set based on the actual application scenario. For example, the model optimization complete message carries the optimized image recognition model. For example, the optimized image recognition model is obtained from the database. For example, the optimized image recognition model is obtained from the blockchain network.

In some embodiments, if the terminal device 200a locally stores the image recognition model and the A sample image sets, and the terminal device 200a has an offline calculation capability, when receiving the model optimization instruction for the image recognition model, the terminal device 200a may locally obtain a sample image in the sample image set C1, and use the obtained sample image as the sampled sample image. The terminal device 200a inputs the wrong class label and the sampled sample image into the image recognition model. A subsequent processing process is the same as the foregoing process. Therefore, details are not described herein.

In this embodiment of this application, the wrong class label is assigned to the sampled sample image, the first probability element indicating the wrong class label is obtained using the image recognition model, and the sampled sample image is adjusted based on the first probability element, to obtain the adversarial sample image whose class is mispredicted by the image recognition model. In this embodiment of this application, training sample augmentation and enhancement is performed on the A sample image sets (that is, training data) based on the adversarial sample image, so that richness of a sample training set for optimization training of the image recognition model can be improved, improving recognition accuracy of the optimized image recognition model.

All of the service server 100, the terminal device 200a, the terminal device 200b, the terminal device 200c, ..., and the terminal device 200n may be blockchain nodes in the blockchain network. Data (for example, the A sample image sets and the image recognition model) described in this description may be stored in a manner that the blockchain node generates a block based on the data and adds the block into a blockchain for storage.

A blockchain is a new application mode of computer technologies such as distributed data storage, point-to-point transmission, a consensus mechanism, and an encryption algorithm, is mainly used to organize data in chronological order, and encrypt the data into a ledger, making the data unforgeable and tamper-proof, and can verify, store, and update data. The blockchain is essentially a decentralized database in which each node stores the same blockchain. In a blockchain network, the node may be distinguished as a core node, a data node, or a light node. Core nodes, data nodes, and light nodes jointly form blockchain nodes. The core node is responsible for consensus in the entire blockchain network. In other words, the core node is a consensus node in the blockchain network. A procedure of writing transaction data into a ledger in the blockchain network may be: The data node or the light node in the blockchain network obtains the transaction data, and transmits the transaction data in the blockchain network (that is, the node transmits the transaction data in a baton manner) until the consensus node receives the transaction data. Then, the consensus node packs the transaction data into a block, performs consensus on the block, and writes the transaction data into the ledger after competing consensus. Herein, the A sample image sets and the image recognition mode are used as example transaction data. After performing consensus on the transaction data, the service server 100 (a blockchain node) generates a block based on the transaction data, and stores the block into the blockchain network. For reading of the transaction data (that is, the A sample image sets and the image recognition model), the blockchain node obtains the block including the transaction data from the blockchain network, and further obtains the transaction data from the block.

A method provided in the embodiments of this application may be performed by a computer device. The computer device may include but is not limited to a terminal device or a service server. The service server may be an independent physical server, a server cluster or distributed system including a plurality of physical servers, or a cloud server providing a basic cloud computing service such as a cloud database, a cloud service, cloud computing, a cloud function, cloud storage, a network service, cloud communication, a middleware service, a domain name service, a security service, a content delivery network (CDN), or a big data and AI platform. The terminal device includes but is not limited to a mobile phone, a computer, an intelligent voice interaction device, a smart home appliance, an in-vehicle terminal, an aircraft, and the like. The terminal device may be connected directly or indirectly to the service server in a wired or wireless manner. This is not limited herein in the embodiments of this application.

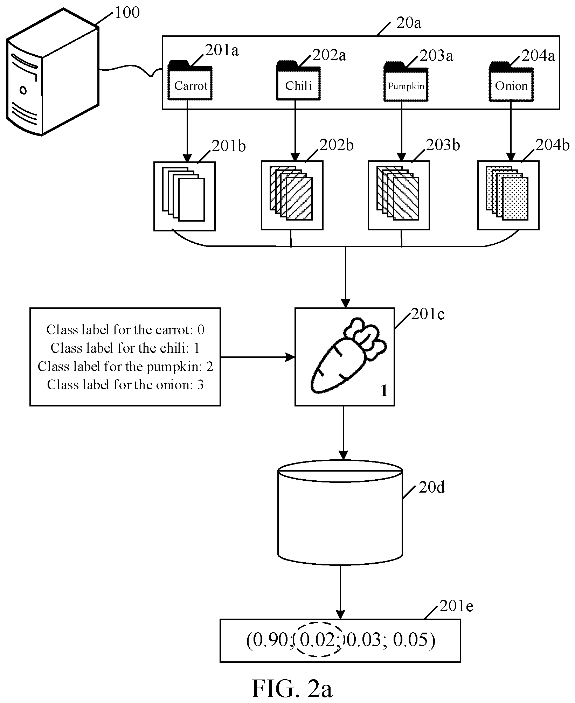

Further, refer to FIG. 2a. FIG. 2a is a schematic diagram 1 of a data processing scenario according to an embodiment of this application. This embodiment of this application may be applied to various scenarios, including but not limited to a cloud technology, AI, smart transportation, assisted driving, audios/videos, and the like. This embodiment of this application may be applied to service scenarios such as an image search scenario, an image generation scenario, an image recommendation service, and an image distribution scenario. The specific service scenarios are not enumerated herein one by one. An implementation process of the data processing scenario may be performed in a service server, may be performed in a terminal device, or may be performed in a terminal device and a service server. This is not limited herein. The terminal device may be any terminal device in the terminal device cluster in the embodiment corresponding to FIG. 1. The service server may be the service server 100 in the embodiment corresponding to FIG. 1. For ease of description and understanding, an example in which the implementation process is performed in the service server is used for description in this embodiment of this application.

As shown in FIG. 2a, the service server 100 may obtain A sample image sets 20a and an image recognition model 20d. A is a positive integer greater than 1. For ease of description and understanding, an example in which A is 4 is used in this embodiment of this application. To be specific, there are four sample image sets, such as a sample image set 201a, a sample image set 202a, a sample image set 203a, and a sample image set 204a shown in FIG. 2a (the sample image set 201a, the sample image set 202a, the sample image set 203a, and the sample image set 204a may respectively include the same or different quantities of sample images). The four sample image sets respectively correspond to different class information. For example, as shown in FIG. 2a, class information for the sample image set 201a is a carrot, class information for the sample image set 202a is a chili, class information for the sample image set 203a is a pumpkin, and class information for the sample image set 204a is an onion. Therefore, the service server 100 may respectively set different class labels for the four sample image sets. A class label for the carrot is set to 0, that is, a class label for the sample image set 201a is 0. A class label for the chili is set to 1, that is, a class label for the sample image set 202a is 1. A class label for the pumpkin is set to 2, that is, a class label for the sample image set 203a is 2. A class label for the onion is set to 3, that is, a class label for the sample image set 204a is 3.

For description and understanding, the carrot, the chili, the pumpkin, and the onion are used as example class information in this embodiment of this application. During actual application, the class information is to be set based on an actual scenario. Similarly, for description and understanding, the values 0 to 3 are used as example class labels in this embodiment of this application. During actual application, the class label is to be set based on the actual scenario.

Further, the service server 100 obtains a sampled sample image from each of the four sample image sets, for example, as shown in FIG. 2a, obtains a sampled sample image 201b from the sample image set 201a, obtains a sampled sample image 202b from the sample image set 202a, obtains a sampled sample image 203b from the sample image set 203a, and obtains a sampled sample image 204b from the sample image set 204a. A total quantity of sampled sample images 201b is not limited in this embodiment of this application, which may be one or more. Similarly, total quantities respectively corresponding to the sampled sample image 202b, the sampled sample image 203b, and the sampled sample image 204b are not limited in this embodiment of this application, all of which may be one or more.

The service server 100 inputs all of the sampled sample image 201b, the sampled sample image 202b, the sampled sample image 203b, and the sampled sample image 204b into the image recognition model 20d. The image recognition model 20d is obtained through pre-training based on the four sample image sets. Processing processes performed by the service server 100 on the sampled sample images using the image recognition model 20d is the same. Therefore, the following uses one sampled sample image (for example, a sampled sample image 201c shown in FIG. 2a) as an example for description. For processing processes of the remaining sampled sample images, refer to the following processing process of the sampled sample image 201c.

The sampled sample image 201c and a wrong class label may be input into the image recognition model 20d. As shown in FIG. 2a, the sampled sample image 201c is an image whose class information is the carrot. In other words, the sampled sample image 201c belongs to the sample image set 201a. A correct class label for the sampled sample image 201c is the class label for the carrot, that is, 0. In FIG. 2a, the class label (that is, 1) for the chili is used as an example of the wrong class label for the sampled sample image 201c (the wrong class label may be obtained through random selection from the chili, the pumpkin, and the onion). The wrong class label for the sampled sample image 201c is randomly generated.

Further, the service server 100 may generate a first probability vector 201e of the sampled sample image 201c for the four class labels using the image recognition model 20d. A dimensionality of the first probability vector 201e is the same as the total quality of class labels, and an element value in each dimension may represent a predicted probability value for a corresponding class label. Therefore, in FIG. 2a, 0.9 in the 1st dimension of the first probability vector 201e may represent a predicted probability for the class label 0, 0.02 in the 2nd dimension may represent a predicted probability for the class label 1, 0.03 in the 3rd dimension may represent a predicted probability for the class label 2, and 0.05 in the 4th dimension may represent a predicted probability for the class label 3. The predicted probabilities in the four dimensions may also be referred to as four probability elements. Based on the first probability vector 201e, the image recognition model 20d can determine that a value of the predicted probability indicating the class label 0 is maximum. Therefore, it may be determined that a class prediction result for the sampled sample image 201c is the class label 0, which is different from the wrong class label (that is, 1) input into the image recognition model 20d. This is because the image recognition model 20d is obtained through pre-training based on the sample image set 201a, the sample image set 202a, the sample image set 203a, and the sample image set 204a in FIG. 2a, and the sampled sample image 201c is from the sample image set 201a. Therefore, the image recognition model 20d recognizes that the class prediction result for the sampled sample image 201c is the class label 0.

Further, the service server 100 may obtain, from the first probability vector 201e using the image recognition model 20d, a first probability element indicating the wrong class label (for example, the class label 1 shown in FIG. 2a), for example, 0.02 shown in FIG. 2a. The service server 100 may adjust the sampled sample image 201c based on the first probability element, to obtain an adversarial sample image corresponding to the sampled sample image 201c.

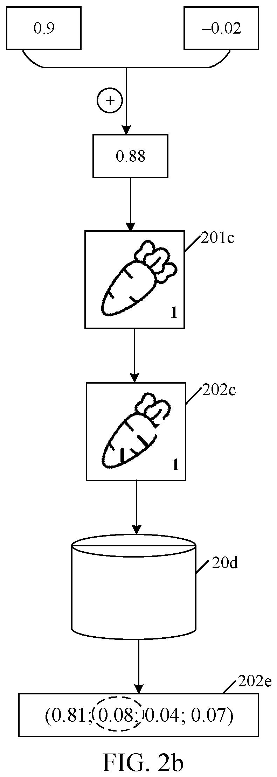

A specific process of adjusting the sampled sample image 201c based on the first probability element, to obtain the adversarial sample image corresponding to the sampled sample image 201c may include: The service server 100 may adjust the sampled sample image 201c based on the first probability element, to obtain an initial adversarial sample image corresponding to the sampled sample image 201c. Refer to FIG. 2b together. FIG. 2b is a schematic diagram 2 of a data processing scenario according to an embodiment of this application. As shown in FIG. 2b, the service server 100 generates a negative probability element corresponding to the first probability element (for example, 0.02 shown in FIG. 2a), that is, -0.02 in FIG. 2b, and performs summation processing on the negative probability element and a maximum probability element (for example, 0.9 shown in FIG. 2a and FIG. 2b) in the first probability vector 201e, to obtain a label loss value of the sampled sample image 201c for the wrong class label, that is, 0.88 in FIG. 2b. Further, the service server 100 adjusts the sampled sample image 201c based on the label loss value, to obtain an initial adversarial sample image 202c corresponding to the sampled sample image 201c. For a specific process of adjusting the sampled sample image 201c based on the label loss value, to obtain the initial adversarial sample image 202c corresponding to the sampled sample image 201c, details are not described in this embodiment of this application, and reference is made to descriptions of operation S103 in the following embodiment corresponding to FIG. 3.

Refer to FIG. 2b again. The service server 100 inputs the wrong class label (for example, the class label 1 shown in FIG. 2a and FIG. 2b) and the initial adversarial sample image 202c into the image recognition model 20d. The service server 100 may generate a second probability vector 202e of the initial adversarial sample image 202c for the four class labels using the image recognition model 20d. A meaning of the second probability vector 202e is the same as that of the first probability vector 201e. Therefore, the meaning of the second probability vector 202e is not described herein, and reference is made to the foregoing descriptions of the meaning of the first probability vector 201e.

Further, the service server 100 obtains, from the second probability vector 202e, a second probability element indicating the wrong class label (that is, the class label 1 shown in FIG. 2a and FIG. 2b), for example, 0.08 shown in FIG. 2b. The service server 100 may determine, based on the second probability element, the adversarial sample image corresponding to the sampled sample image 201c. To be specific, the service server 100 may analyze whether the second probability element is a probability element with a maximum value in the second probability vector 202e. If the second probability element is the probability element with the maximum value in the second probability vector 202e, the initial adversarial sample image 202c may be determined as the adversarial sample image corresponding to the sampled sample image 201c (that is, in this case, the image recognition model 20d can misrecognize that a class prediction result for the adversarial sample image is the wrong class label 1); or if it is analyzed that the second probability element is not the probability element with the maximum value in the second probability vector 202e, the initial adversarial sample image 202c is further adjusted, for a larger probability element indicating the wrong class label in a third probability vector output by the image recognition model 20d for an adjusted initial adversarial sample image, until the image recognition model 20d can misrecognize that an adversarial sample image obtained through a plurality of rounds of adjustment is the wrong class label 1.

The class prediction result obtained by the image recognition model 20d for the adversarial sample image is the wrong class label 1. To be specific, the adversarial sample image is still an image including the carrot, but the image recognition model 20d may misrecognize that the class prediction result for the adversarial sample image is the class label 1 for the chili. The service server 100 may subsequently continue to perform optimization training on the image recognition model 20d based on a correct class label (that is, the class label 0 for the carrot) and the adversarial sample image, to obtain an optimized image recognition model. The optimized image recognition model (that is, an image recognition model obtained through optimization training) can accurately recognize that the class prediction result for the adversarial sample image is the class label 0, that is, the class label for the carrot.

Based on the foregoing, the embodiments of this application propose a method for generating an adversarial sample image. According to the method, the adversarial sample image misrecognized by the image recognition model may be generated. The adversarial sample image can improve sample diversity of a training set for optimization training of the image recognition model. The training set with diversified samples can improve accuracy of optimization training of the image recognition model, thereby improving class label recognition accuracy and recognition generalization performance of a trained image recognition model. In addition, the adversarial sample image is an image with strong perturbations (that is, an image that may be misrecognized by the image recognition model) in comparison with the sampled sample image. However, the image recognition model can overcome the strong perturbations, that is, the image recognition model can accurately recognize, using a higher anti-interference capability, that the class prediction result for the adversarial sample image is the correct class label (that is, the class label 0).

Further, refer to FIG. 3. FIG. 3 is a schematic flowchart 1 of a data processing method according to an embodiment of this application. The data processing method may be performed by a service server (for example, the service server 100 shown in FIG. 1), may be performed by a terminal device (for example, the terminal device 200a shown in FIG. 1), or may be performed interactively by a service server and a terminal device. For ease of understanding, an example in which the method is performed by the service server is used for description in this embodiment of this application. As shown in FIG. 3, the data processing method may include at least the following operations S101 to S103.

Operation S101: Obtain A sample image sets and an image recognition model, A being a positive integer greater than 1, each of the A sample image sets corresponding to one of A different class labels, the image recognition model being obtained through pre-training based on the A sample image sets, and the A class labels including a wrong class label.

Specifically, the service server obtains the A sample image sets. The A sample image sets respectively correspond to different class information. For example, class information for a sample image set is a carrot (that is, each sample image in the sample image set is related to the carrot), and class information for another sample image set is a chili (that is, each sample image in the sample image set is related to the chili). Therefore, the service server may set a different class label for each sample image set. For example, a class label for the carrot is set to 0, that is, a class label for a sample image set whose class information is the carrot is 0. For another example, a class label for the chili is set to 1, that is, a class label for a sample image set whose class information is the chili is 1.

The service server separately inputs the A sample image sets into an initial image recognition model; generates, using the initial image recognition model, predicted initial classes respectively corresponding to the A sample image sets;

determines, based on the predicted initial classes respectively corresponding to the sample image sets and class labels respectively corresponding to the sample image sets, class loss values respectively corresponding to the sample image sets; determines, based on the class loss values respectively corresponding to the A sample image sets, a total loss value corresponding to the initial image recognition model; and adjusts a parameter in the initial image recognition model based on the total loss value, to obtain the image recognition model, The image recognition model has a capability of accurately recognizing class prediction results for the A sample image sets. For example, the image recognition model can accurately recognize that a class prediction result for the sample image set whose class information is the carrot is the class label 0 (the class prediction result may also be understood as a class prediction result for each sample image in the sample image set).

A quantity of sample images in the sample image set is not limited in this embodiment of this application, which may be one or more. Sample images in the same sample image set corresponds to the same class information, so that sample images in the same sample image set correspond to the same class label. The quantity of sample image sets is also not limited in this embodiment of this application, which may be two or more.

In this embodiment of this application, the class label is a label for identifying the class information. The class information is not limited in this embodiment of this application, and may be set based on an actual application scenario. For example, the class information may be object information. In this case, each sample image set includes different object information, for example, a cat, a dog, or a vehicle. For example, the class information may be object carrier information. In this case, each sample image set includes different object carrier information, for example, a mask object, a mold object, a photo object, a paper object, or a real object.

A model type of the initial image recognition model is not limited in this embodiment of this application. The initial image recognition model may include any one or more neural networks, for example, a convolutional neural network (CNN), a residual network (ResNet), a convolutional neural network based on an extended channel learning mechanism (wide residual network, Wide-ResNet), and a high-resolution net (HRNet).

A specific process in which the service server trains the initial image recognition model may be: separately inputting the A sample image sets into the image recognition model. Processing processes performed by the initial image recognition model on sample images in the A sample image sets are the same. Therefore, the following uses a first sample image carrying a first class label as an example for description. For a processing process of a remaining sample image, refer to the following descriptions. The first sample image is any sample image in the A sample image sets. If the first sample image belongs to a sample image set C1, the first class label is a class label corresponding to the sample image set C1. If the first sample image belongs to a sample image set C2, the first class label is a class label corresponding to the sample image set C2. Other cases are understood as described above, and will not be described in detail one by one. The service server may obtain, using the initial image recognition model, a first initial probability vector corresponding to the first sample image. A dimensionality of the first initial probability vector is the same as A (that is, one dimension corresponds to one class label). An element value (which may also be referred to as a probability element) in each dimension of the first initial probability vector represents a predicted probability for a corresponding class label. A sum of element values in the dimensions is 1. A class label corresponding to a maximum element value in the first initial probability vector is a predicted initial class corresponding to the first sample image. During early training, the predicted initial class corresponding to the first sample image may be different from the first class label. Therefore, the service server may generate, based on the predicted initial class corresponding to the first sample image and the first class label, a class loss value corresponding to the first sample image. Through the foregoing process, the service server may obtain the class loss values respectively corresponding to the sample images in the A sample image sets, and perform summation processing on the obtained class loss values to obtain the total loss value corresponding to the initial image recognition model. Further, the service server adjusts the parameter in the initial image recognition model based on the total loss value, to obtain a pre-trained image recognition model. The image recognition model can accurately recognize a class prediction result for each sample image in the A sample image sets. For example, the image recognition model can accurately recognize that a class prediction result for the first sample image is the first class label. A manner for adjusting the parameter in the initial image recognition model is not limited in this embodiment of this application, and may be set based on the actual application scenario. In addition, the quantity of iterations (epochs) of the initial image recognition model is not limited in this embodiment of this application, and may be set based on the actual application scenario. A total model loss threshold is also not limited, and may be set based on the actual application scenario.

Operation S102: Obtain a sampled sample image from the A sample image sets, and input the sampled sample image and the wrong class label into the image recognition model, to generate a first probability vector of the sampled sample image for the A class labels, the wrong class label being different from a class label corresponding to a sample image set to which the sampled sample image belongs, the first probability vector including A probability elements, each of the A probability elements indicating one of the A class labels, and one probability element being used to represent a probability that the sampled sample image belongs to a class label indicated by the probability element.

Specifically, a sample image set $C_b$ among the A sample image sets is used as an example for description, b being a positive integer, and b being less than or equal to A. The service server may determine a sampling ratio, and perform sampling processing on a sample image in the sample image set $C_b$ based on the sampling ratio, to obtain the sampled sample image; and obtain, from the A class labels, a class label (which may be randomly obtained) different from a class label for the sample image set $C_b$, and determine the obtained class label as the wrong class label.

Refer back to FIG. 2a. The service server 100 respectively obtains sampled sample images from the four sample image sets. One possible sampling manner is determining a sampling ratio, for example, 5%. In this case, the service server 100 performs random image sampling in the sample image set 201a to obtain 5% of sample images in the sample image set 201a as sampled sample images 201b. For example, if there are 10000 sample images in the sample image set 201a, there are 500 sampled sample images 201b. For generation processes of the sampled sample images corresponding to the other sample image sets (including the sampled sample image 202b, the sampled sample image 203b, and the sampled sample image 204b in FIG. 2a), refer to the generation process of the sampled sample image 201b. Details are not described herein.

For ease of description and understanding, an example in which the sampled sample image 201b in FIG. 2a includes a first sampled sample image and a second sampled sample image is used in this embodiment of this application. Each of the first sampled sample image and the second sampled sample image is a sample image including the carrot, so that correct class labels respectively corresponding to the first sampled sample image and the second sampled sample image are the class label for the carrot, that is, the class label 0 shown in FIG. 2a. An example in which the sampled sample image 202b in FIG. 2a includes a third sampled sample image and a fourth sampled sample image is used in this embodiment of this application. Each of the third sampled sample image and the fourth sampled sample image is a sample image including the chili, so that correct class labels respectively corresponding to the third sampled sample image and the fourth sampled sample image are the class label for the chili, that is, the class label 1 shown in FIG. 2a.

The service server 100 randomly extracts a class label, for example, the class label 1, from the class label 1, the class label 2, and the class label 3 shown in FIG. 2a, and sets the extracted class label as a wrong class label for the first sampled sample image. Similarly, the service server 100 randomly extracts a class label, for example, the class label 2, from the class label 1, the class label 2, and the class label 3 shown in FIG. 2a, and sets the extracted class label as a wrong class label for the second sampled sample image. The service server 100 randomly extracts a class label, for example, the class label 2, from the class label 0, the class label 2, and the class label 3 shown in FIG. 2a, and sets the extracted class label as a wrong class label for the third sampled sample image. Similarly, the service server 100 randomly extracts a class label, for example, the class label 0, from the class label 0, the class label 2, and the class label 3 shown in FIG. 2a, and sets the extracted class label as a wrong class label for the fourth sampled sample image.

Setting processes of wrong class labels for sampled sample images are the same. Therefore, details are not described herein one by one, and reference is made to the setting processes of the wrong class labels for the first sampled sample image, the second sampled sample image, the third sampled sample image, and the fourth sampled sample image.

During actual application, if the image recognition model is used to recognize a real object (for example, a human), in this embodiment of this application, the wrong class label may alternatively be set for the sampled sample image through the following process. For ease of description and understanding, an example in which A is 3 is used. To be specific, there are three sample image sets: a sample image set 3a, a sample image set 3b, and a sample image set 3c. Class information for the sample image set 3a is the real object whose class label is 30a. Class information for the sample image set 3b is a paper object whose class label is 30b. Class information for the sample image set 3c is a mask object whose class label is 30c. In this case, the sample image set 3b and the sample image set 3c may be considered as attack sample image sets for the sample image set 3a.

A process in which the service server obtains sampled sample images respectively corresponding to the sample image set 3a, the sample image set 3b, and the sample image set 3c are the same as the foregoing process, and thus is not described herein in detail. It is assumed that the sampled sample image in the sample image set 3a includes a fifth sampled sample image and a sixth sampled sample image, the sampled sample image in the sample image set 3b includes a seventh sampled sample image and an eighth sampled sample image, and the sampled sample image in the sample image set 3c includes a ninth sampled sample image and a tenth sampled sample image. The service server 100 randomly extracts a class label, for example, the class label 30b, from the class label 30b and the class label 30c, and sets the extracted class label as a wrong class label for the fifth sampled sample image. Similarly, the service server 100 randomly extracts a class label, for example, the class label 30c, from the class label 30b and the class label 30c, and sets the extracted class label as a wrong class label for the sixth sampled sample image. The service server sets the class label 30a as wrong class labels respectively corresponding to the seventh sampled sample image, the eighth sampled sample image, the ninth sampled sample image, and the tenth sampled sample image. Therefore, this embodiment of this application provides two wrong class label setting methods. During actual application, one of the two setting methods may be selected as actually needed.

Further, the service server inputs the sampled sample images respectively corresponding to the A sample image sets into the image recognition model. Processing processes performed by the image recognition model on the sampled sample images are the same. Therefore, refer to the related descriptions of the sampled sample image 201c in the foregoing embodiment corresponding to FIG. 2a.

The image recognition model can obtain a first probability vector corresponding to each sampled sample image. Each first probability vector includes A probability values (which may also be referred to as probability elements). Since the image recognition model is obtained through pre-training based on the A sample image sets, the image recognition model can output a correct probability distribution for each sampled sample image (the correct probability distribution indicates that a probability value in the output first probability vector that indicates a correct class label is maximum). For ease of understanding, refer back to FIG. 2a. For each sampled sample image (including the sampled sample image 201c) in the sampled sample images 201b, the $1^{st}$ element (which may also be referred to as a probability element for indicating the class label 0, the probability element being used to represent a probability that the sampled sample image belongs to the class label 0 indicated by the probability element) in a first probability vector (including the first probability vector 201e shown in FIG. 2a) output by the image recognition model 20d may be infinitely close to 1, while the other three elements may be infinitely close to 0. For each sampled sample image in the sampled sample images 202b, the $2^{nd}$ element in a first probability vector output by the image recognition model 20d may be infinitely close to 1, and the other three elements (specifically the $1^{st}$ element, the $3^{rd}$ element, and the $4^{th}$ element) may be infinitely close to 0. For each sampled sample image in the sampled sample images 203b, the $3^{rd}$ element in a first probability vector output by the image recognition model 20d may be infinitely close to 1, and the other three elements (specifically the $1^{st}$ element, the $2^{nd}$ element, and the $4^{th}$ element) may be infinitely close to 0. For each sampled sample image in the sampled sample images 204b, the $4^{th}$ element in a first probability vector output by the image recognition model 20d may be infinitely close to 1, and the other three elements (specifically the $1^{st}$ element, the $2^{nd}$ element, and the $3^{rd}$ element) may be infinitely close to 0.

Operation S103: Obtain, from the A probability elements in the first probability vector, a first probability element indicating the wrong class label, and adjust the sampled sample image based on the first probability element, to obtain an adversarial sample image corresponding to the sampled sample image, a class prediction result obtained by performing class prediction on the adversarial sample image using the image recognition model being the wrong class label.

Specifically, the service server adjusts the sampled sample image based on the first probability element, to obtain an initial adversarial sample image corresponding to the sampled sample image, and inputs the wrong class label and the initial adversarial sample image into the image recognition model. The wrong class label and the initial adversarial sample image may be input into the image recognition model as two pieces of mutually independent data, and there is a mapping relationship between the wrong class label and the initial adversarial sample image. Alternatively, the wrong class label is added into a file header or an end of file of the initial adversarial sample image, and the initial adversarial sample image carrying the wrong class label is further input into the image recognition model. A second probability vector of the initial adversarial sample image for the A class labels is generated using the image recognition model. The second probability vector also includes A probability elements. Each of the A probability elements indicates one of the A class labels. One probability element is used to represent a probability that the initial adversarial sample image belongs to a class label indicated by the probability element. A second probability element in the second probability vector that indicates the wrong class label is obtained, and the adversarial sample image corresponding to the sampled sample image is determined based on the second probability element. One manner of determining the adversarial sample image is as follows: The service server may analyze whether the second probability element is a probability element with a maximum value in the second probability vector. If the second probability element is the probability element with the maximum value in the second probability vector, the initial adversarial sample image may be determined as the adversarial sample image corresponding to the sampled sample image (that is, in this case, the image recognition model can misrecognize that the class prediction result for the adversarial sample image is the wrong class label); or if it is analyzed that the second probability element is not the probability element with the maximum value in the second probability vector, the initial adversarial sample image is further adjusted, for a larger probability element indicating the wrong class label in a third probability vector output by the image recognition model for an adjusted initial adversarial sample image, until the image recognition model can misrecognize that an adversarial sample image obtained through a plurality of rounds of adjustment is the wrong class label.

A specific process of adjusting the sampled sample image based on the first probability element, to obtain the initial adversarial sample image corresponding to the sampled sample image may include: generating a negative probability element corresponding to the first probability element, and performing summation processing on the negative probability element and a maximum probability element in the first probability vector, to obtain a label loss value of the sampled sample image for the wrong class label; and adjusting the sampled sample image based on the label loss value, to obtain the initial adversarial sample image corresponding to the sampled sample image. If the initial adversarial sample image can be directly used as the adversarial sample image corresponding to the sampled sample image, the sampled sample image may be adjusted based on the label loss value, to directly obtain the adversarial sample image corresponding to the sampled sample image.

A specific process of adjusting the sampled sample image based on the label loss value, to obtain the initial adversarial sample image corresponding to the sampled sample image may include: generating an initial gradient value for the sampled sample image based on the label loss value, obtaining a numerical sign of the initial gradient value, and generating, based on the numerical sign, a signed unit value corresponding to the initial gradient value; performing product processing on an initial learning rate and the signed unit value to obtain a first to-be-clipped value, and performing clipping processing on the first to-be-clipped value using a first clipping interval generated based on an attack intensity, to obtain a gradient value for adjusting the sampled sample image; and performing difference calculation processing on the sampled sample image and the gradient value (the gradient value may also be referred to as a perturbation value, and the difference calculation processing may be understood as adding the perturbation value into the sampled sample image to obtain a noisy image) to obtain a second to-be-clipped value, and performing clipping processing on the second to-be-clipped value using a second clipping interval generated based on a pixel level, to obtain the initial adversarial sample image corresponding to the sampled sample image (if the initial adversarial sample image can be directly used as the adversarial sample image corresponding to the sampled sample image, the initial adversarial sample image herein may be directly referred to as the adversarial sample image).

Specifically, after the service server obtains the first probability vector of the sampled sample image, the service server uses the maximum probability element in the first probability vector as a first loss value, uses, as a second loss value, the first probability element in the first probability vector that corresponds to the wrong class label, and uses a difference between the first loss value and the second loss value as the label loss value of the sampled sample image for the wrong class label. Further, the service server adjusts the sampled sample image based on the label loss value, to obtain the initial adversarial sample image for the sampled sample image. A specific implementation may use a project gradient descent (PGD) attack algorithm (an iterative attack algorithm). A specific implementation process based on the PGD attack algorithm may be described with the following formula (1).

$$
I_T^{adv^t} = clip\{I_T^{adv^{t-1}} - clip\left\{\alpha * sign\left(\nabla_{I_T^{adv^{t-1}}} L_{adv}^t\right), [-eps, eps]\right\}, [0, 255]\} \quad (1)
$$

In the formula (1), t represents a current iteration, and t is a positive integer. In other words, the image recognition model may perform iteration at least once, that is, the sampled sample image may be adjusted at least once. $I_T^{adv^t}$ represents result data obtained through a $t^{th}$ iteration, for example, the initial adversarial sample image generated after the 1st iteration, or the adversarial sample image generated after the last iteration. $I_T^{adv^{t-1}}$ represents input data for the $t^{th}$ iteration. For example, input data for the 1st iteration is the sampled sample image. If there is the 2nd iteration, input data for the 2nd iteration is the initial adversarial sample image, that is, the result data obtained through the 1st iteration. Similarly, if there are more iterations, input data for a next iteration is result data obtained through a previous iteration. $\nabla_{I_T^{adv^{t-1}}} L_{adv}^t = \frac{\partial L_{adv}^t}{\partial I_T^{adv^{t-1}}}$ represents the initial gradient value. $L_{adv}^t$ represents a label loss value obtained after the $t^{th}$ iteration, for example, a label loss value obtained after the 1st iteration. $\alpha$ represents the learning rate. *sign*(.) represents a sign function. The sign function can change each element of the initial gradient value (map to {-1, 0, 1}. *eps* represents the attack intensity. To be specific, an absolute value of each element value of a gradient map for adjustment each time is required not to be greater than the attack intensity. The attack intensity is an adjustable parameter, and is generally set to 8/255, 16/255, 32/255, or the like. A *clip*(.,.) function represents clipping. In other words, the *clip*(.,.) function can control all values within a specified closed interval range. [-*eps, eps*] represents the first clipping interval. [0, 255] represents the second clipping interval.

An image adjustment manner is not limited in this embodiment of this application, and may be the foregoing PGD attack method or another attack method, for example, a fast gradient sign method (FGSM) (a gradient-based adversarial sample generation algorithm), an iterative fast gradient sign method (I-FGSM) (an improved FGSM), and a momentum iterative fast gradient sign method (MI-FGSM) (another improved FGSM).

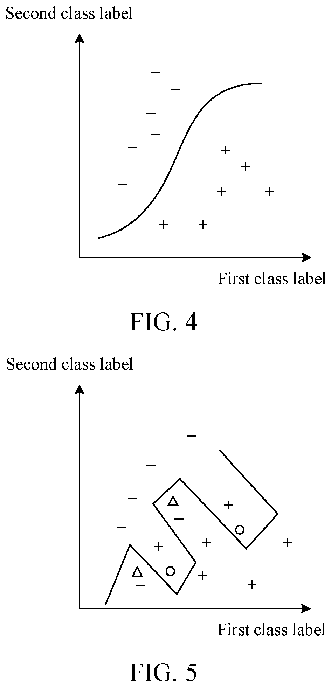

Further, the service server inputs the wrong class label and the initial adversarial sample image into the image recognition model, and generates the second probability vector of the initial adversarial sample image for the A class labels using the image recognition model. Generally speaking, to implement a successful adversarial attack, $\alpha$ and the quantity *t* of iterations are required to satisfy specific values, to ensure that an adjusted sampled sample image can cross an interface of the image recognition model and become a sample image that can be recognized by the image recognition model as the wrong class label (for distinguishing from the adversarial sample image, the sample image herein is referred to as a strong adversarial sample image, that is, a probability element that is output by the image recognition model for the strong adversarial sample image and that indicates a wrong class label approaches 1). However, selecting such a strong adversarial sample image can improve robustness of the image recognition model, but cannot be used to improve accuracy of the image recognition model as appropriate data enhancement means. This is because the strong adversarial sample image is totally in a distribution for the wrong class label, and if optimization training is performed on the image optimization model using the strong adversarial sample image, an interface of an image recognition model obtained through optimization training may become an ungentle curve, for example, a zigzag curve. Refer to FIG. 4 and FIG. 5. FIG. 4 is a schematic diagram of a classification interface trained with clean sample data according to an embodiment of this application. FIG. 5 is a schematic diagram of a classification interface trained with first mixed sample data according to an embodiment of this application. The clean sample data is the foregoing A sample image sets. The first mixed sample data includes the foregoing A sample image sets and the foregoing strong adversarial sample image. For ease of description and understanding, A may be equal to 2. In other words, the A class labels include the first class label and the second class label shown in FIG. 4 and FIG. 5. Alternatively, A is greater than 2, where one class label is used as a real class label, and one or more remaining class labels are used as attack class labels. In FIG. 4, a class feature distribution region (that is, a region in which signs "+" are located) corresponding to the first class label and a class feature distribution region (that is, a region in which signs "-" are located) corresponding to the second class label are mutually independent. In other words, the image recognition model can accurately recognize the first class label and the second class label.

In FIG. 5, class feature distribution regions (that is, regions in which signs "+" are located and regions in which signs "△" is located) corresponding to the first class label and class feature distribution regions (that is, regions in which signs "-" are located and regions in which signs "∘" are located) corresponding to the second class label are mutually independent. To better fit the strong adversarial sample image, the interface of the image recognition model is changed to be zigzag. This can improve robustness of an image recognition model obtained through optimization for strong adversarial sample data, but may misclassify some sample images that are close to the interface and whose confidences are not high. For example, in FIG. 5, some signs "-" are located in the class feature regions corresponding to the first class label, and some signs "+" are located in the class feature regions corresponding to the second class label. In this case, the image recognition model cannot accurately recognize the first class label and the second class label, that is, accuracy of the image recognition model obtained through optimization is damaged. If A is greater than 2, and the real class label and the attack class label are not distinguished, the quantity of class feature distribution regions is the same as A. For example, if A=3, there are three class feature distribution regions.

Based on the foregoing analysis, an objective of this embodiment of this application is to improve accuracy and generalization performance of the image recognition model while improving the robustness. Therefore, A boundary constraint is added in this embodiment of this application, to screen the adversarial sample image. In other words, the adversarial sample image for data enhancement is required not to be excessively far from the boundary. Therefore, another manner for determining the adversarial sample image may be as follows: The service server adjusts the sampled sample image based on the first probability element, to obtain an initial adversarial sample image corresponding to the sampled sample image; inputs the wrong class label and the initial adversarial sample image into the image recognition model, and generates a second probability vector of the initial adversarial sample image for the A class labels using the image recognition model; obtains a second probability element for the wrong class label from A probability elements included in the second probability vector; and continues to adjust the initial adversarial sample image based on the second probability element if the second probability element does not satisfy the boundary constraint or the class prediction result obtained by performing class prediction on the adversarial sample image is not the wrong class label (a process of continuing to adjust the initial adversarial sample image is the same as the specific implementation process of adjusting the sampled sample image based on the first probability element, to obtain the initial adversarial sample image, so that details are not described herein, and reference is made to the foregoing descriptions; and an image adjustment manner in a subsequent model iteration process (that is, an image adjustment process) is the same as the adjustment manner for the sampled sample image); or determines, if the second probability element satisfies the boundary constraint or the class prediction result obtained by performing class prediction on the adversarial sample image is the wrong class label, the initial adversarial sample image as the adversarial sample image corresponding to the sampled sample image, the second probability element being a maximum value among the A probability elements included in the second probability vector in a case that the class prediction result is the wrong class label. The adversarial sample image is expected in this application to not only satisfy the boundary constraint but also ensure that the image recognition model can misrecognize the adversarial sample image. The service server may further compare the second probability element with a probability constraint value, the probability constraint value being a reciprocal of A; and determine, if the second probability element is less than the probability constraint value, that the second probability element does not satisfy the boundary constraint; or determine, if the second probability element is greater than or equal to the probability constraint value, that the second probability element satisfies the boundary constraint. To be specific, in this application, the learning rate and the quantity of iterations are controlled. If a probability element (including the foregoing second probability element) in a probability vector (including the foregoing second probability vector) that corresponds to the wrong class label is greater than 1/A, and the probability element corresponding to the wrong class label is a maximum value in the probability vector (the probability element with the maximum value is used to indicate that a class prediction result obtained by the image recognition model for the initial adversarial sample image is a class label indicated by the probability element), model iteration (that is, image adjustment) is stopped, and a currently adjusted sample image is used as an appropriate adversarial sample image, without waiting for the probability element corresponding to the wrong class label to approach 1.

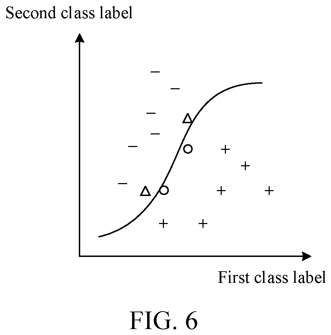

Based on the foregoing, the adversarial sample image obtained in this embodiment of this application may be located close to the classification interface rather than in the distribution for the wrong class label, so that the classification interface of the image recognition model obtained through optimization training with the adversarial sample image may be gentler. Refer to FIG. 6. FIG. 6 is a schematic diagram of a classification interface trained with second mixed sample data according to an embodiment of this application. The second mixed sample data includes the foregoing A sample image sets and the foregoing adversarial sample image. As shown in FIG. 6, there is substantially no interaction between class feature distribution regions (that is, a region in which signs "+" are located and a region in which signs "△" are located) corresponding to the first class label and class feature distribution regions (that is, a region in which signs "-" are located and a region in which signs "∘" are located) corresponding to the second class label, and a few interactive class features are substantially located on the classification interface. In this case, the image recognition model obtained through optimization can accurately recognize the first class label and the second class label. In other words, it can be ensured that the optimized image recognition model (referred to as an optimized image recognition model) can compensate for deficiencies of training data on the basis of maintaining or improving the original recognition accuracy. Therefore, a defense capability and safety of the optimized image recognition model can be improved.

This embodiment of this application proposes brand-new boundary constraint-based adversarial data enhancement, to augment and enhance the training data using particularity of adversarial data in boundary distribution, thereby improving the defense capability and the generalization performance of the image recognition model obtained through optimization.

In this embodiment of this application, a computer device may obtain the A sample image sets and the image recognition model. Each of the A sample image sets corresponds to one of the A different class labels, and the image recognition model is obtained through pre-training based on the A sample image sets, so that the image recognition model can accurately determine a class label for a sample image in the A sample image sets. Further, the computer device obtains the sampled sample image from the A sample image sets, and inputs the wrong class label and the sampled sample image into the image recognition model. The wrong class label belongs to the A class labels. The wrong class label is different from the class label corresponding to the sample image set to which the sampled sample image belongs. The first probability vector of the sampled sample image for the A class labels may be generated using the image recognition model. The first probability vector includes the A probability elements. Each of the A probability elements indicates one of the A class labels. One probability element is used to represent a probability that the sampled sample image belongs to a class label indicated by the probability element. Since the image recognition model can accurately determine the class label for the sample image in the A sample image sets, a probability element in the first probability vector that indicates the correct class label is maximum, or in other words, the probability element indicating the correct class label is far greater than the first probability element indicating the wrong class label. The correct class label is the class label corresponding to the sample image set to which the sampled sample image belongs. Further, the computer device may adjust the sampled sample image based on the first probability element, to obtain the adversarial sample image corresponding to the sampled sample image. The class prediction result obtained by performing class prediction on the adversarial sample image using the image recognition model is the wrong class label. In other words, the sampled sample image is adjusted, so that the image recognition model can misdetermine a class label for the adversarial sample image. Based on the foregoing, this embodiment of this application proposes a method for generating an adversarial sample image. According to the method, the adversarial sample image misrecognized by the image recognition model may be generated. The adversarial sample image can improve sample diversity of a training set for optimization training of the image recognition model. The training set with diversified samples can improve accuracy of optimization training of the image recognition model, thereby improving class label recognition accuracy and recognition generalization performance of a trained image recognition model. In addition, since the second probability element for the wrong class label that is predicted by the image recognition model for the adversarial sample image satisfies the boundary constraint, the classification interface of the image recognition model obtained through optimization training is more gentile, further ensuring model accuracy.

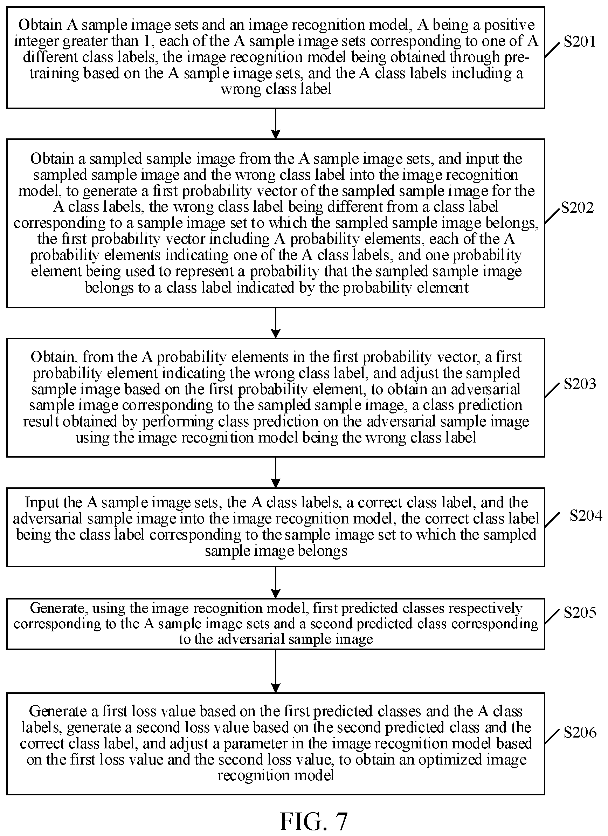

Refer to FIG. 7. FIG. 7 is a schematic flowchart 2 of a data processing method according to an embodiment of this application. The method may be performed by a service server (for example, the service server 100 shown in FIG. 1), may be performed by a terminal device (for example, the terminal device 200a shown in FIG. 1), or may be performed interactively by a service server and a terminal device. For ease of understanding, an example in which the method is performed by the service server is used for description in this embodiment of this application. As shown in FIG. 7, the method may include at least the following operations.

Operation S201: Obtain A sample image sets and an image recognition model, A being a positive integer greater than 1, each of the A sample image sets corresponding to one of A different class labels, the image recognition model being obtained through pre-training based on the A sample image sets, and the A class labels including a wrong class label.

Specifically, the service server obtains A original image sets, and inputs all the A original image sets into an object detection model, each of the A original image sets corresponding to one of A different pieces of class information, the A original image sets including an original image set $D_b$, the original image set $D_b$ including an original image $E_f$, f being a positive integer, and f being less than or equal to a total quantity of original images in the original image set $D_b$; determines regional coordinates of a key region in the original image $E_f$ using the object detection model, and generates, based on the regional coordinates, a to-be-labeled sample image corresponding to the original image $E_f$; determines a to-be-labeled sample image corresponding to each original image in the original image set $D_b$ as a to-be-labeled sample image set; and generates a class label $H_b$ based on class information corresponding to the original image set $D_b$, and determines a to-be-labeled sample image set labeled with the class label $H_b$ as the sample image set $C_b$.

A specific process of generating, based on the regional coordinates, the to-be-labeled sample image corresponding to the original image $E_f$ may include: generating, based on the regional coordinates, an initial detection box including the key region, and performing expansion processing on the initial detection box to obtain a detection box comprising a target object, the key region belonging to the target object; obtaining, from the detection box, a to-be-scaled image comprising the target object, obtaining a first image size, and performing scaling processing on the to-be-scaled image based on the first image size, to obtain a to-be-cropped image; and obtaining a second image size, and performing cropping processing on the to-be-cropped image based on the second image size, to obtain the to-be-labeled sample image corresponding to the original image $E_f$, the second image size being smaller than the first image size.

A model type of the object detection model is not limited by the service server, and may be set based on an actual application scenario, for example, region with CNN feature (Faster R-CNN for short) (a target detection model), single shot multibox detector (SSD for short) (another target detection model), and you only look once (YOLO for short) (a simple and convenient target detection algorithm).

The key region belongs to the target object. The target object is not limited in this embodiment of this application, for example, may be a cat, a dog, a human, a desk, or a chili. Therefore, the key region is not limited, and is to be set based on the target object. An expansion factor for the initial detection box is to be set based on the key region. Therefore, the expansion factor is not limited in this embodiment of this application. The second image size is an input size for the image recognition model.

Operation S202: Obtain a sampled sample image from the A sample image sets, and input the sampled sample image and the wrong class label into the image recognition model, to generate a first probability vector of the sampled sample image for the A class labels, the wrong class label being different from a class label corresponding to a sample image set to which the sampled sample image belongs, the first probability vector including A probability elements, each of the A probability elements indicating one of the A class labels, and one probability element being used to represent a probability that the sampled sample image belongs to a class label indicated by the probability element.

Operation S203: Obtain, from the A probability elements in the first probability vector, a first probability element indicating the wrong class label, and adjust the sampled sample image based on the first probability element, to obtain an adversarial sample image corresponding to the sampled sample image, a class prediction result obtained by performing class prediction on the adversarial sample image using the image recognition model being the wrong class label.

For specific implementation processes of operation S202 and operation S203, refer to the descriptions of operation S102 and operation S103 in the embodiment corresponding to FIG. 3. Details are not described herein.

Operation S204: Input the A sample image sets, the A class labels, a correct class label, and the adversarial sample image into the image recognition model, the correct class label being the class label corresponding to the sample image set to which the sampled sample image belongs.

The A sample image sets, the A class labels, the correct class label, and the adversarial sample image may be respectively input into the image recognition model as four pieces of mutually independent data, and there is a mapping relationship between the A sample image sets and the A class labels and a mapping relationship between the correct class label and the adversarial sample image. Alternatively, a class label to which a sample image in a sample image set belongs is added into a file header or an end of file of the sample image, the correct class label is added into a file header or an end of file of the adversarial sample image, and the sample image carrying the class label and the adversarial sample image carrying the correct class label are further input into the image recognition model.

Operation S205: Generate, using the image recognition model, first predicted classes respectively corresponding to the A sample image sets and a second predicted class corresponding to the adversarial sample image.

Operation S206: Generate a first loss value based on the first predicted classes and the A class labels, generate a second loss value based on the second predicted class and the correct class label, and adjust a parameter in the image recognition model based on the first loss value and the second loss value (specifically performing weighted summation on the first loss value and the second loss value to obtain a total loss value, and then adjusting the parameter in the image recognition model based on the total loss value), to obtain an optimized image recognition model, a class prediction result obtained by performing class prediction on the adversarial sample image using the optimized image recognition model being the correct class label, and a class prediction result obtained by performing class prediction on the sample image in the sample image set using the optimized image recognition model being still a class label corresponding to the sample image set.

A process in which the service server performs optimization training on the image recognition model is the same as a process in which the service server trains an initial image recognition model. Therefore, for specific implementation processes of operation S204 to operation S206, refer to the descriptions of operation S101 in the embodiment corresponding to FIG. 3. Details are not described herein.

The optimized image recognition model proposed in this embodiment of this application may be deployed on the terminal device. For example, detection is performed on an image input for real object recognition (for example, real human recognition); and if a real object is detected, a subsequent recognition procedure is entered, or if no real object is detected, for example, a photo object is detected, an error is reported, and a prompt is given for retry. This embodiment of this application may be applied to all applications related to object recognition, including but not limited to: online payment, offline payment, an access control unlocking system, recognition for unlocking a mobile phone, automatic object recognition clearance, and the like.

Based on the foregoing, this embodiment of this application proposes a method for generating an adversarial sample image. According to the method, the adversarial sample image misrecognized by the image recognition model may be generated. The adversarial sample image can improve sample diversity of a training set for optimization training of the image recognition model. The training set with diversified samples can improve accuracy of optimization training of the image recognition model, thereby improving class label recognition accuracy and recognition generalization performance of a trained image recognition model.

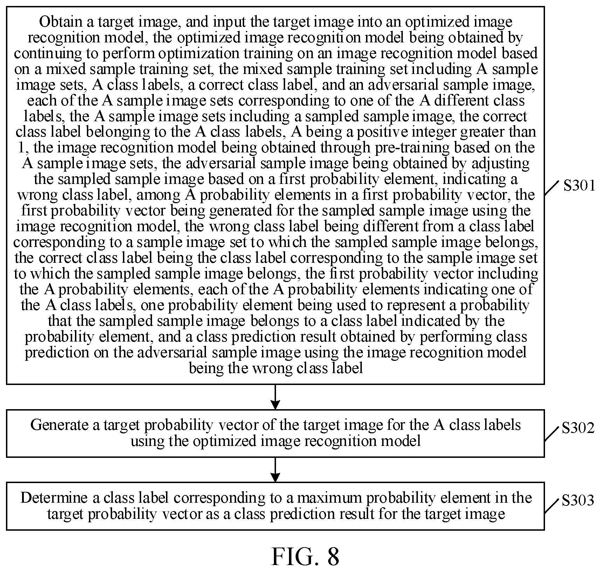

Refer to FIG. 8. FIG. 8 is a schematic flowchart 3 of a data processing method according to an embodiment of this application. The method may be performed by a service server (for example, the service server 100 shown in FIG. 1), may be performed by a terminal device (for example, the terminal device 200a shown in FIG. 1), or may be performed interactively by a service server and a terminal device. For ease of understanding, an example in which the method is performed by the service server is used for description in this embodiment of this application. As shown in FIG. 8, the method may include at least the following operations.

Operation S301: Obtain a target image, and input the target image into an optimized image recognition model, the optimized image recognition model being obtained by continuing to perform optimization training on an image recognition model based on a mixed sample training set, the mixed sample training set including A sample image sets, A class labels, a correct class label, and an adversarial sample image, each of the A sample image sets corresponding to one of the A different class labels, the A sample image sets including a sampled sample image, the correct class label belonging to the A class labels, A being a positive integer greater than 1, the image recognition model being obtained through pre-training based on the A sample image sets, the adversarial sample image being obtained by adjusting the sampled sample image based on a first probability element, indicating a wrong class label, among A probability elements in a first probability vector, the first probability vector being generated for the sampled sample image using the image recognition model, the wrong class label being different from a class label corresponding to a sample image set to which the sampled sample image belongs, the correct class label being the class label corresponding to the sample image set to which the sampled sample image belongs, the first probability vector including the A probability elements, each of the A probability elements indicating one of the A class labels, one probability element being used to represent a probability that the sampled sample image belongs to a class label indicated by the probability element, and a class prediction result obtained by performing class prediction on the adversarial sample image using the image recognition model being the wrong class label.

Operation S302: Generate a target probability vector of the target image for the A class labels using the optimized image recognition model.

Operation S303: Determine a class label corresponding to a maximum probability element in the target probability vector as a class prediction result for the target image.

Specifically, the image recognition model in this embodiment of this application may be used to recognize a real object, for example, a real human. In this case, the image recognition model may be referred to as a real object detection model. In a current intelligent object recognition payment service, more and more real object detection technologies are applied to products, providing a powerful guarantee for safety in payment. However, in an actual application scenario of real object detection, there are a wide variety of attacks brought by criminals, with novel attack forms that are difficult to guard against. For example, in a paper attack, among numerous types of materials, there is always one type that the model has not been trained on. Therefore, it can bypass the real object detection model and implement an attack. This problem also exists in high-precision three-dimensional attacks. Once a new material appears, the real object detection model may not be able to defend. The root cause is that training data fails to cover the entire class space. Therefore, this embodiment of this application proposes a brand-new real object detection technology based on adversarial data enhancement with a boundary constraint. A particular adversarial sample image is designed to enhance real object training data, to improve the whole real object detection performance. For a specific generation process of the adversarial sample image, refer to the foregoing descriptions in the embodiments respectively corresponding to FIG. 3 and FIG. 7.

Based on the foregoing, this embodiment of this application proposes a method for generating an adversarial sample image. According to the method, the adversarial sample image misrecognized by the image recognition model may be generated. The adversarial sample image can improve sample diversity of a training set for optimization training of the image recognition model. The training set with diversified samples can improve accuracy of optimization training of the image recognition model, thereby improving class label recognition accuracy and recognition generalization performance of a trained image recognition model.

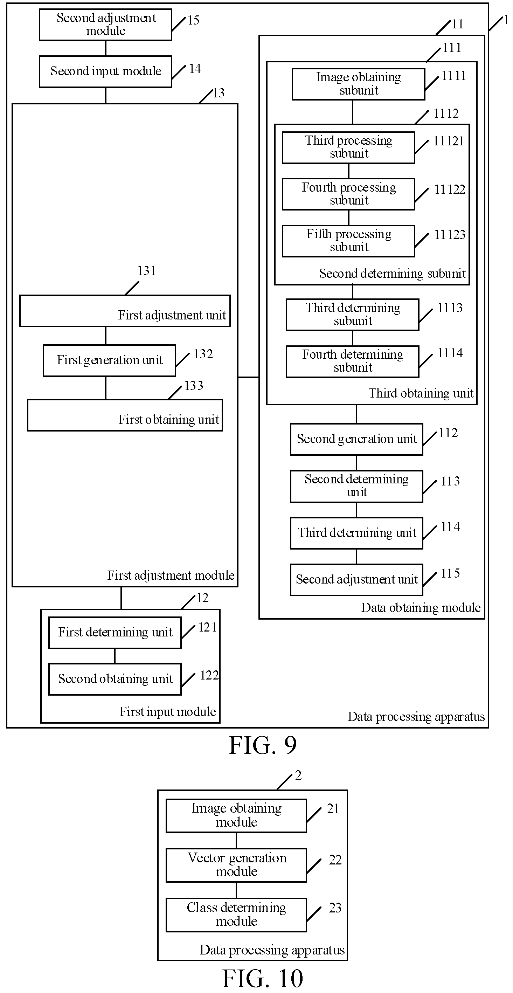

Further, refer to FIG. 9. FIG. 9 is a schematic diagram 1 of a structure of a data processing apparatus according to an embodiment of this application. The data processing apparatus 1 may be configured to perform corresponding operations in the method provided in the embodiments of this application. As shown in FIG. 9, the image data processing apparatus 1 may include a data obtaining module 11, a first input module 12, and a first adjustment module 13.

The data obtaining module 11 is configured to obtain A sample image sets and an image recognition model, A being a positive integer greater than 1, each of the A sample image sets corresponding to one of A different class labels, the image recognition model being obtained through pre-training based on the A sample image sets, and the A class labels including a wrong class label.

The first input module 12 is configured to obtain a sampled sample image from the A sample image sets, and input the sampled sample image and the wrong class label into the image recognition model, to generate a first probability vector of the sampled sample image for the A class labels, the wrong class label being different from a class label corresponding to a sample image set to which the sampled sample image belongs, the first probability vector including A probability elements, each of the A probability elements indicating one of the A class labels, and one probability element being used to represent a probability that the sampled sample image belongs to a class label indicated by the probability element.

The first adjustment module 13 is configured to obtain, from the A probability elements in the first probability vector, a first probability element indicating the wrong class label, and adjust the sampled sample image based on the first probability element, to obtain an adversarial sample image corresponding to the sampled sample image, a class prediction result obtained by performing class prediction on the adversarial sample image using the image recognition model being the wrong class label.

For specific implementations of functions of the data obtaining module 11, the first input module 12, and the first adjustment module 13, refer to the descriptions of operation S101 to operation S103 in the embodiment corresponding to FIG. 3. Details are not described herein again.

The first adjustment module 13 may be specifically configured to generate a negative probability element corresponding to the first probability element, perform summation processing on the negative probability element and a maximum probability element in the first probability vector, to obtain a label loss value of the sampled sample image for the wrong class label, and adjust the sampled sample image based on the label loss value, to obtain the adversarial sample image corresponding to the sampled sample image.

When configured to adjust the sampled sample image based on the label loss value, to obtain the adversarial sample image corresponding to the sampled sample image, the first adjustment module 13 is specifically configured to generate an initial gradient value for the sampled sample image based on the label loss value, obtain a numerical sign of the initial gradient value, generate, based on the numerical sign, a signed unit value corresponding to the initial gradient value, perform product processing on an initial learning rate and the signed unit value to obtain a first to-be-clipped value, perform clipping processing on the first to-be-clipped value using a first clipping interval generated based on an attack intensity, to obtain a gradient value for adjusting the sampled sample image, perform difference calculation processing on the sampled sample image and the gradient value to obtain a second to-be-clipped value, and perform clipping processing on the second to-be-clipped value using a second clipping interval generated based on a pixel level, to obtain the adversarial sample image corresponding to the sampled sample image.

Refer to FIG. 9. The first adjustment module 13 may include a first adjustment unit 131, a first generation unit 132, and a first obtaining unit 133.

The first adjustment unit 131 is configured to adjust the sampled sample image based on the first probability element, to obtain an initial adversarial sample image corresponding to the sampled sample image.

The first generation unit 132 is configured to input the wrong class label and the initial adversarial sample image into the image recognition model, and generate a second probability vector of the initial adversarial sample image for the A class labels using the image recognition model.

The first obtaining unit 133 is configured to obtain a second probability element for the wrong class label from A probability elements included in the second probability vector.

The first adjustment unit 131 is further configured to continue to adjust the initial adversarial sample image based on the second probability element if the second probability element does not satisfy a boundary constraint or the class prediction result obtained by performing class prediction on the adversarial sample image is not the wrong class label.

The first obtaining unit 133 is further configured to determine, if the second probability element satisfies a boundary constraint or the class prediction result obtained by performing class prediction on the adversarial sample image is the wrong class label, the initial adversarial sample image as the adversarial sample image corresponding to the sampled sample image, the second probability element being a maximum value among the A probability elements included in the second probability vector in a case that the class prediction result is the wrong class label.

For specific implementations of functions of the first adjustment unit 131, the first generation unit 132, and the first obtaining unit 133, refer to the descriptions of operation S103 in the embodiment corresponding to FIG. 3. Details are not described herein again.

The first obtaining unit 133 is further configured to compare the second probability element with a probability constraint value, the probability constraint value being a reciprocal of A.

The first obtaining unit 133 is further configured to determine, if the second probability element is less than the probability constraint value, that the second probability element does not satisfy the boundary constraint.

The first obtaining unit 133 is further configured to determine, if the second probability element is greater than or equal to the probability constraint value, that the second probability element satisfies the boundary constraint.

Refer to FIG. 9. The data processing apparatus 1 may further include a second input module 14 and a second adjustment module 15.

The second input module 14 is configured to input the A sample image sets, the A class labels, a correct class label, and the adversarial sample image into the image recognition model, the correct class label being the class label corresponding to the sample image set to which the sampled sample image belongs.

The second input module 14 is further configured to generate, using the image recognition model, first predicted classes respectively corresponding to the A sample image sets and a second predicted class corresponding to the adversarial sample image.

The second adjustment module 15 is configured to generate a first loss value based on the first predicted classes and the A class labels, generate a second loss value based on the second predicted class and the correct class label, and adjust a parameter in the image recognition model based on the first loss value and the second loss value, to obtain an optimized image recognition model, a class prediction result obtained by performing class prediction on the adversarial sample image using the optimized image recognition model being the correct class label.

For specific implementations of functions of the second input module 14 and the second adjustment module 15, refer to the descriptions of operation S204 to operation S206 in the embodiment corresponding to FIG. 7. Details are not described herein again.

Refer to FIG. 9. The first input module 12 may include a first determining unit 121 and a second obtaining unit 122.

The A sample image sets include the sample image set Cb, b being a positive integer, and b being less than or equal to A.

The first determining unit 121 is configured to determine a sampling ratio, and perform sampling processing on a sample image in the sample image set Cb based on the sampling ratio, to obtain the sampled sample image.

The second obtaining unit 122 is configured to obtain, from the A class labels, a class label different from a class label for the sample image set Cb, and determine the obtained class label as the wrong class label.

For specific implementations of functions of the first determining unit 121 and the second obtaining unit 122, refer to the descriptions of operation S102 in the embodiment corresponding to FIG. 3. Details are not described herein again.

Refer to FIG. 9. The data obtaining module 11 may include a third obtaining unit 111, a second generation unit 112, a second determining unit 113, a third determining unit 114, and a second adjustment unit 115.

The third obtaining unit 111 is configured to obtain the A sample image sets, and separately input the A class labels and the A sample image sets into an initial image recognition model.

The second generation unit 112 is configured to generate, using the initial image recognition model, predicted initial classes respectively corresponding to the A sample image sets.

The second determining unit 113 is configured to determine, based on the predicted initial classes and the A class labels, class loss values respectively corresponding to the A sample image sets.

The third determining unit 114 is configured to determine, based on the class loss values respectively corresponding to the A sample image sets, a total loss value corresponding to the initial image recognition model.

The second adjustment unit 115 is configured to adjust a parameter in the initial image recognition model based on the total loss value, to obtain the image recognition model, a class prediction result obtained by performing class prediction on the sample image set Cb using the image recognition model being the class label for the sample image set Cb, the A sample image sets including the sample image set Cb, b being a positive integer, and b being less than or equal to A.

For specific implementations of functions of the third obtaining unit 111, the second generation unit 112, the second determining unit 113, the third determining unit 114, and the second adjustment unit 115, refer to the descriptions of operation S101 in the embodiment corresponding to FIG. 3. Details are not described herein again.

Refer to FIG. 9. The third obtaining unit 111 may include an image obtaining subunit 1111, a second determining subunit 1112, a third determining subunit 1113, and a fourth determining subunit 1114.

The image obtaining subunit 1111 is configured to obtain A original image sets, and input all the A original image sets into an object detection model, the A original image sets corresponding to different class information, the A original image sets including an original image set $D_b$, the original image set $D_b$ including an original image $E_f$, f being a positive integer, and f being less than or equal to a total quantity of original images in the original image set $D_b$.

The second determining subunit 1112 is configured to determine regional coordinates of a key region in the original image $E_f$ using the object detection model, and generate, based on the regional coordinates, a to-be-labeled sample image corresponding to the original image $E_f$.

The third determining subunit 1113 is configured to determine a to-be-labeled sample image corresponding to each original image in the original image set $D_b$ as a to-be-labeled sample image set.

The fourth determining subunit 1114 is configured to generate a class label $H_b$ based on class information corresponding to the original image set $D_b$, and determine a to-be-labeled sample image set labeled with the class label $H_b$ as the sample image set $C_b$.

For specific implementations of functions of the image obtaining subunit 1111, the second determining subunit 1112, the third determining subunit 1113, and the fourth determining subunit 1114, refer to the descriptions of operation S201 in the embodiment corresponding to FIG. 7. Details are not described herein again.

Refer to FIG. 9. The second determining subunit 1112 may include a third processing subunit 11121, a fourth processing subunit 11122, and a fifth processing subunit 11123.

The third processing subunit 11121 is configured to generate, based on the regional coordinates, an initial detection box including the key region, and perform expansion processing on the initial detection box to obtain a detection box including a target object, the key region belonging to the target object.

The fourth processing subunit 11122 is configured to obtain, from the detection box, a to-be-scaled image including the target object, obtain a first image size, and perform scaling processing on the to-be-scaled image based on the first image size, to obtain a to-be-cropped image.

The fifth processing subunit 11123 is configured to obtain a second image size, and perform cropping processing on the to-be-cropped image based on the second image size, to obtain the to-be-labeled sample image corresponding to the original image $E_f$, the second image size being smaller than the first image size.

For specific implementations of functions of the third processing subunit 11121, the fourth processing subunit 11122, and the fifth processing subunit 11123, refer to the descriptions of operation S201 in the embodiment corresponding to FIG. 7. Details are not described herein again.

Based on the foregoing, this embodiment of this application proposes a method for generating an adversarial sample image. According to the method, the adversarial sample image misrecognized by the image recognition model may be generated. The adversarial sample image can improve sample diversity of a training set for optimization training of the image recognition model. The training set with diversified samples can improve accuracy of optimization training of the image recognition model, thereby improving class label recognition accuracy and recognition generalization performance of a trained image recognition model. In addition, since the second probability element for the wrong class label that is predicted by the image recognition model for the adversarial sample image satisfies the boundary constraint, the classification interface of the image recognition model obtained through optimization training is more gentile, further ensuring model accuracy.

Further, refer to FIG. 10. FIG. 10 is a schematic diagram 2 of a structure of a data processing apparatus according to an embodiment of this application. The data processing apparatus 2 may be configured to perform corresponding operations in the method provided in the embodiments of this application. As shown in FIG. 10, the image data processing apparatus 2 may include an image obtaining module 21, a vector generation module 22, and a class determining module 23.

The image obtaining module 21 is configured to obtain a target image, and input the target image into an optimized image recognition model, the optimized image recognition model being obtained by continuing to perform optimization training on an image recognition model based on a mixed sample training set, the mixed sample training set including A sample image sets, A class labels, a correct class label, and an adversarial sample image, each of the A sample image sets corresponding to one of the A different class labels, the A sample image sets including a sampled sample image, the correct class label belonging to the A class labels, A being a positive integer greater than 1, the image recognition model being obtained through pre-training based on the A sample image sets, the adversarial sample image being obtained by adjusting the sampled sample image based on a first probability element, indicating a wrong class label, among A probability elements in a first probability vector, the first probability vector being generated for the sampled sample image using the image recognition model, the wrong class label being different from a class label corresponding to a sample image set to which the sampled sample image belongs, the correct class label being the class label corresponding to the sample image set to which the sampled sample image belongs, the first probability vector including the A probability elements, each of the A probability elements indicating one of the A class labels, one probability element being used to represent a probability that the sampled sample image belongs to a class label indicated by the probability element, and a class prediction result obtained by performing class prediction on the adversarial sample image using the image recognition model being the wrong class label.

The vector generation module 22 is configured to generate a target probability vector of the target image for the A class labels using the optimized image recognition model.

The class determining module 23 is configured to determine a class label corresponding to a maximum probability element in the target probability vector as a class prediction result for the target image.

For specific implementations of functions of the image obtaining module 21, the vector generation module 22, and the class determining module 23, refer to the descriptions of operation S301 to operation S303 in the embodiment corresponding to FIG. 8. Details are not described herein again.

Based on the foregoing, this embodiment of this application proposes a method for generating an adversarial sample image. According to the method, the adversarial sample image misrecognized by the image recognition model may be generated. The adversarial sample image can improve sample diversity of a training set for optimization training of the image recognition model. The training set with diversified samples can improve accuracy of optimization training of the image recognition model, thereby improving class label recognition accuracy and recognition generalization performance of a trained image recognition model.

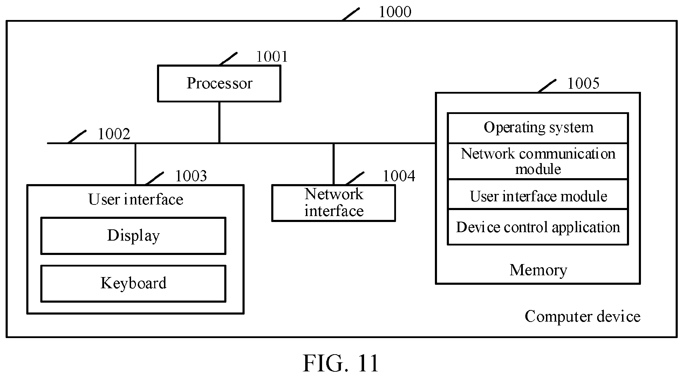

Further, refer to FIG. 11. FIG. 11 is a schematic diagram of a structure of a computer device according to an embodiment of this application. As shown in FIG. 11, the computer device 1000 may include at least one processor 1001, for example, a central processing unit (CPU), at least one network interface 1004, a user interface 1003, a memory 1005, and at least one communication bus 1002. The communication bus 1002 is configured to implement connection and communication between these components. In some embodiments, the user interface 1003 may include a display and a keyboard. In some embodiments, the network interface 1004 may include a standard wired interface and a standard wireless interface (for example, a wireless fidelity (Wi-Fi) interface). The memory 1005 may be a high-speed random access memory (RAM), or may be a non-volatile memory, for example, at least one magnetic disk memory. In some embodiments, the memory 1005 may be at least one storage apparatus that is located far away from the foregoing processor 1001. As shown in FIG. 11, the memory 1005 used as a computer storage medium may include an operating system, a network communication module, a user interface module, and a device control application.

In the computer device 1000 shown in FIG. 11, the network interface 1004 may provide a network communication function. The user interface 1003 is mainly configured to provide an input interface for a user. The processor 1001 may be configured to invoke the device control application stored in the memory 1005 to implement:

obtaining A sample image sets and an image recognition model, A being a positive integer greater than 1, each of the A sample image sets corresponding to one of A different class labels, the image recognition model being obtained through pre-training based on the A sample image sets, and the A class labels including a wrong class label;

obtaining a sampled sample image from the A sample image sets, and inputting the sampled sample image and the wrong class label into the image recognition model, to generate a first probability vector of the sampled sample image for the A class labels, the wrong class label being different from a class label corresponding to a sample image set to which the sampled sample image belongs, the first probability vector including A probability elements, each of the A probability elements indicating one of the A class labels, and one probability element being used to represent a probability that the sampled sample image belongs to a class label indicated by the probability element; and

obtaining, from the A probability elements in the first probability vector, a first probability element indicating the wrong class label, and adjusting the sampled sample image based on the first probability element, to obtain an adversarial sample image corresponding to the sampled sample image, a class prediction result obtained by performing class prediction on the adversarial sample image using the image recognition model being the wrong class label.

Alternatively, the processor 1001 may be configured to invoke the device control application stored in the memory 1005 to implement:

obtaining a target image, and inputting the target image into an optimized image recognition model, the optimized image recognition model being obtained by continuing to perform optimization training on an image recognition model based on a mixed sample training set, the mixed sample training set including A sample image sets, A class labels, a correct class label, and an adversarial sample image, each of the A sample image sets corresponding to one of the A different class labels, the A sample image sets including a sampled sample image, the correct class label belonging to the A class labels, A being a positive integer greater than 1, the image recognition model being obtained through pre-training based on the A sample image sets, the adversarial sample image being obtained by adjusting the sampled sample image based on a first probability element, indicating a wrong class label, among A probability elements in a first probability vector, the first probability vector being generated for the sampled sample image using the image recognition model, the wrong class label being different from a class label corresponding to a sample image set to which the sampled sample image belongs, the correct class label being the class label corresponding to the sample image set to which the sampled sample image belongs, the first probability vector including the A probability elements, each of the A probability elements indicating one of the A class labels, one probability element being used to represent a probability that the sampled sample image belongs to a class label indicated by the probability element, and a class prediction result obtained by performing class prediction on the adversarial sample image using the image recognition model being the wrong class label;

generating a target probability vector of the target image for the A class labels using the optimized image recognition model; and

determining a class label corresponding to a maximum probability element in the target probability vector as a class prediction result for the target image.

The computer device 1000 described in this embodiment of this application can implement the descriptions of the data processing method or apparatus in the foregoing embodiments. Details are not described herein again. In addition, the descriptions of beneficial effects of the same method are not described herein again.

An embodiment of this application further provides a computer-readable storage medium, having a computer program stored therein. When the computer program is executed by a processor, the descriptions of the data processing method or apparatus in the foregoing embodiments are implemented. Details are not described herein again. In addition, the descriptions of beneficial effects of the same method are not described herein again.

The computer-readable storage medium may be an internal storage unit of the data processing apparatus or the computer device provided in any one of the foregoing embodiments, for example, a hard disk or an internal memory of the computer device. The computer-readable storage medium may alternatively be an external storage device of the computer device, for example, a plug-in hard disk, a smart media card (SMC), a secure digital (SD) card, or a flash card on the computer device. Further, the computer-readable storage medium may alternatively include both an internal storage unit and an external storage device of the computer device. The computer-readable storage medium is configured to store the computer program and another program and data that are required by the computer device. The computer-readable storage medium may further be configured to temporarily store data that has been output or is to be output.

An embodiment of this application further provides a computer program product, including a computer program. The computer program is stored in a computer-readable storage medium. A processor of a computer device reads the computer program from the computer-readable storage medium. The processor executes the computer program, to cause the computer device to implement the descriptions of the data processing method or apparatus in the foregoing embodiments. Details are not described herein again. In addition, the descriptions of beneficial effects of the same method are not described herein again.

The terms "first", "second", and the like in the specification, the claims, and the drawings in the embodiments of this application are used to distinguish between different objects rather than describe a specific sequence. In addition, the term "include" and any variant thereof are intended to cover a non-exclusive inclusion. For example, a process, method, apparatus, product, or device that includes a series of operations or units is not limited to the listed operations or modules; and instead, in some embodiments, further includes an operation or module that is not listed, or in some embodiments, further includes another operation or unit that is intrinsic to the process, method, apparatus, product, or device.

A person of ordinary skill in the art may be aware that, in combination with the examples described in the embodiments disclosed in this specification, units and algorithm operations may be implemented by electronic hardware, computer software, or a combination thereof. To clearly describe the interchangeability between the hardware and the software, the foregoing has generally described compositions and operations of each example according to functions. Whether the functions are executed in a mode of hardware or software depends on particular applications and design constraint conditions of the technical solutions. A person skilled in the art may use different methods to implement the described functions for each particular application, but it shall not be considered that the implementation goes beyond the scope of this application.

What is disclosed above is merely exemplary embodiments of this application, and certainly is not intended to limit the scope of the claims of this application. Therefore, equivalent variations made in accordance with the claims of this application shall fall within the scope of this application.

**Claims**

1.  An image processing method, comprising:

    obtaining N image sets, N being a positive integer greater than 1, the N image sets each corresponding to one of N different image class labels;
    inputting a sample image and a first reference image class label into an image recognition model, to generate a first probability vector, the sample image being selected from a sample image set being one of the N image sets, the first reference image class label being selected from the N image class labels and different from a sample image class label corresponding to the sample image set, the first probability vector comprising N probability elements each indicating a probability that the sample image corresponds to the respective one of the N image class labels; and
    obtaining, from the N probability elements, a first probability element corresponding to the first reference class label, and adjusting the sample image based on the first probability element, to obtain an adversarial sample image, whose class prediction result obtained using the image recognition model being the first reference class label.

2. The method according to claim 1, wherein the adjusting the sample image based on the first probability element, to obtain an adversarial sample image comprises:

generating a negative probability element corresponding to the first probability element, and performing summation processing on the negative probability element and a maximum probability element in the first probability vector, to obtain a label loss value of the sample image for the first reference class label; and adjusting the sample image based on the label loss value, to obtain the adversarial sample image corresponding to the sample image.

3. The method according to claim 2, wherein the adjusting the sample image based on the first probability element, to obtain an adversarial sample image comprises:

generating an initial gradient value for the sample image based on the label loss value, obtaining a numerical sign of the initial gradient value, and generating, based on the numerical sign, a signed unit value corresponding to the initial gradient value;
obtaining a product of an initial learning rate and the signed unit value as a first to-be-clipped value, and performing clipping processing on the first to-be-clipped value using a first clipping interval generated based on an attack intensity, to obtain a gradient value for adjusting the sample image; and
obtaining a difference between the sample image and the gradient value to obtain a second to-be-clipped value, and performing clipping processing on the second to-be-clipped value using a second clipping interval generated based on a pixel level, to obtain the adversarial sample image corresponding to the sample image.

4. The method according to any one of claims 1 to 3, wherein the adjusting the sample image based on the first probability element, to obtain an adversarial sample image comprises:

adjusting the sample image based on the first probability element, to obtain an initial adversarial sample image corresponding to the sample image;
inputting the first reference class label and the initial adversarial sample image into the image recognition model, and generating a second probability vector of the initial adversarial sample image for the N class labels using the image recognition model;
obtaining a second probability element for the first reference class label from N probability elements comprised in the second probability vector; and
adjusting the initial adversarial sample image based on the second probability element if the second probability element does not satisfy a boundary constraint or the class prediction result obtained by performing class prediction on the adversarial sample image is not the first reference class label; and
determining, if the second probability element satisfies the boundary constraint or the class prediction result obtained by performing class prediction on the adversarial sample image is the first reference class label, the initial adversarial sample image as the adversarial sample image corresponding to the sample image, the second probability element being a maximum value among the N probability elements comprised in the second probability vector in a case that the class prediction result is the first reference class label.

5. The method according to any one of claims 1 to 4, further comprising:

comparing the second probability element with a probability constraint value, the probability constraint value being a reciprocal of N; and
determining, if the second probability element is less than the probability constraint value, that the second probability element does not satisfy the boundary constraint; and
determining, if the second probability element is greater than or equal to the probability constraint value, that the second probability element satisfies the boundary constraint.

6. The method according to any one of claims 1 to 5, further comprising:

inputting the N sample image sets, the N class labels, a second reference class label, and the adversarial sample image into the image recognition model, the second reference class label being the class label corresponding to the sample image set to which the sample image belongs;
generating, using the image recognition model, first predicted classes respectively corresponding to the N sample image sets and a second predicted class corresponding to the adversarial sample image; and generating a first loss value based on the first predicted classes and the N class labels, generating a second loss value based on the second predicted class and the second reference class label, and adjusting a parameter in the image recognition model based on the first loss value and the second loss value, to obtain an optimized image recognition model, a class prediction result obtained by performing class prediction on the adversarial sample image using the optimized image recognition model being the second reference class label.

7. The method according to any one of claims 1 to 6, wherein the N sample image sets comprise a sample image set $C_b$, b being a positive integer, and b being less than or equal to N; and the obtaining a sample image from the N sample image sets comprises:

determining a sampling ratio, and performing sampling processing on sample images in the sample image set $C_b$ based on the sampling ratio, to obtain the sample image; and
obtaining, from the N class labels, a class label different from a class label for the sample image set $C_b$, and determining the obtained class label as the first reference class label.

8. The method according to any one of claims 1 to 7, wherein the image recognition model being obtained through pre-training using the N image sets, and the obtaining N sample image sets and an image recognition model comprises:

obtaining the N sample image sets, and separately inputting the N class labels and the N sample image sets into an initial image recognition model;
generating, using the initial image recognition model, predicted initial classes respectively corresponding to the N sample image sets;
determining, based on the predicted initial classes and the N class labels, class loss values respectively corresponding to the N sample image sets;
determining, based on the class loss values respectively corresponding to the N sample image sets, a total loss value corresponding to the initial image recognition model; and
adjusting a parameter in the initial image recognition model based on the total loss value, to obtain the image recognition model, a class prediction result obtained by performing class prediction on a sample image set $C_b$ using the image recognition model being a class label for the sample image set $C_b$, the N sample image sets comprising the sample image set $C_b$, b being a positive integer, and b being less than or equal to N.

9. The method according to claim 8, wherein the obtaining N sample image sets comprises:

obtaining N original image sets, and inputting all the N original image sets into an object detection model, each of the N original image sets corresponding to one of N different pieces of class information, the N original image sets comprising an original image set $D_b$, the original image set $D_b$ comprising an original image $E_f$, f being a positive integer, and f being less than or equal to a total quantity of original images in the original image set $D_b$;
determining regional coordinates of a key region in the original image $E_f$ using the object detection model, and generating, based on the regional coordinates, a to-be-labeled sample image corresponding to the original image $E_f$;
determining to-be-labeled sample images respectively corresponding to an original image in the original image set $D_b$ as a to-be-labeled sample image set; and
generating a class label $H_b$ based on class information corresponding to the original image set $D_b$, and determining a to-be-labeled sample image set labeled with the class label $H_b$ as the sample image set $C_b$.

10. The method according to claim 9, wherein the generating, based on the regional coordinates, a to-be-labeled sample image corresponding to the original image $E_f$ comprises:

generating, based on the regional coordinates, an initial detection box comprising the key region, and performing expansion processing on the initial detection box to obtain a detection box comprising a target object, the key region belonging to the target object;
obtaining, from the detection box, a to-be-scaled image comprising the target object, obtaining a first image size, and performing scaling processing on the to-be-scaled image based on the first image size, to obtain a to-be-clipped image; and
obtaining a second image size, and performing clipping processing on the to-be-crlipped image based on the second image size, to obtain the to-be-labeled sample image corresponding to the original image $E_f$, the second image size being smaller than the first image size.

**11.** A data processing method, comprising:

obtaining a target image, and inputting the target image into an optimized image recognition model, the optimized image recognition model being obtained by performing optimization training on an image recognition model based on a mixed sample training set, the mixed sample training set comprising N sample image sets, N different class labels, a second reference class label, and an adversarial sample image, each of the N sample image sets corresponding to one of the N different class labels, the N sample image sets comprising a sample image, the second reference class label belonging to the N different class labels, N being a positive integer greater than 1, the image recognition model being obtained through pre-training based on the N sample image sets, the adversarial sample image being obtained by adjusting the sample image based on a first probability element which indicates a first reference class label and is comprised in N probability elements in a first probability vector, the first probability vector being generated for the sample image using the image recognition model, the first reference class label being different from a class label corresponding to a sample image set to which the sample image belongs, the second reference class label being the class label corresponding to the sample image set to which the sample image belongs, the first probability vector comprising the N probability elements, each of the N probability elements indicating one of the N different class labels, one probability element representing a probability that the sample image corresponding to a class label indicated by the probability element, and a class prediction result obtained by performing class prediction on the adversarial sample image using the image recognition model being the first reference class label;

generating a target probability vector of the target image for the N class labels using the optimized image recognition model; and

determining a class label corresponding to a maximum probability element in the target probability vector as a class prediction result for the target image.

**12.** A data processing apparatus, comprising:

a data obtaining module, configured to obtain N image sets, N being a positive integer greater than 1, the N image sets each corresponding to one of N different image class labels;

a first input module, configured to input a sample image and a first reference image class label into an image recognition model, to generate a first probability vector, the sample image being selected from a sample image set being one of the N image sets, the first reference image class label being selected from the N image class labels and different from a sample image class label corresponding to the sample image set, the first probability vector comprising N probability elements each indicating a probability that the sample image corresponds to the respective one of the N image class labels; and

a first adjustment module, configured to obtain, from the N probability elements, a first probability element corresponding to the first reference class label, and adjust the sample image based on the first probability element, to obtain an adversarial sample image, whose class prediction result obtained using the image recognition model being the first reference class label.

**13.** A data processing apparatus, comprising:

an image obtaining module, configured to obtain a target image, and input the target image into an optimized image recognition model, the optimized image recognition model being obtained by performing optimization training on an image recognition model based on a mixed sample training set, the mixed sample training set comprising N sample image sets, N different class labels, a second reference class label, and an adversarial sample image, each of the N sample image sets corresponding to one of the N different class labels, the N sample image sets comprising a sample image, the second reference class label belonging to the N different class labels, N being a positive integer greater than 1, the image recognition model being obtained through pre-training based on the N sample image sets, the adversarial sample image being obtained by adjusting the sample image based on a first probability element which indicates a first reference class label and is comprised in N probability elements in a first probability vector, the first probability vector being generated for the sample image using the image recognition model, the first reference class label being different from a class label corresponding to a sample image set to which the sample image belongs, the second reference class label being the class label corresponding to the sample image set to which the sample image belongs, the first probability vector comprising the N probability elements, each of the N probability elements indicating one of the N different class labels, one probability element representing a probability that the sample image corresponding to a class label indicated by the probability element, and a class prediction result obtained by performing class prediction on the adversarial sample image using the image recognition model being the first reference class label;

a vector generation module, configured to generate a target probability vector of the target image for the N class labels using the optimized image recognition model; and

a class determining module, configured to determine a class label corresponding to a maximum probability element in the target probability vector as a class prediction result for the target image.

14. A computer device, comprising a processor, a memory, and a network interface,
   the processor being connected to the memory and the network interface, the network interface being configured to provide a data communication function, the memory being configured to store a computer program, and the processor being configured to invoke the computer program, to cause the computer device to perform the method according to any one of claims 1 to 11.

15. A computer-readable storage medium, having a computer program stored therein, the computer program being suitable for a process to load and execute, to cause a computer device having the processor to perform the method according to any one of claims 1 to 11.

16. A computer program product, comprising a computer program, the computer program being stored in a computer-readable storage medium, and the computer program being suitable for a processor to read and execute, to cause a computer device having the processor to perform the method according to any one of claims 1 to 11.

FIG. 1

Class label for the carrot: 0
Class label for the chili: 1
Class label for the pumpkin: 2
Class label for the onion: 3

(0.90; 0.02; 0.03; 0.05)

FIG. 2a

FIG. 2b

Obtain A sample image sets and an image recognition model, A being a positive integer greater than 1, each of the A sample image sets corresponding to one of A different class labels, the image recognition model being obtained through pre-training based on the A sample image sets, and the A class labels including a wrong class label

S101

Obtain a sampled sample image from the A sample image sets, and input the sampled sample image and the wrong class label into the image recognition model, to generate a first probability vector of the sampled sample image for the A class labels, the wrong class label being different from a class label corresponding to a sample image set to which the sampled sample image belongs, the first probability vector including A probability elements, each of the A probability elements indicating one of the A class labels, and one probability element being used to represent a probability that the sampled sample image belongs to a class label indicated by the probability element

S102

Obtain, from the A probability elements in the first probability vector, a first probability element indicating the wrong class label, and adjust the sampled sample image based on the first probability element, to obtain an adversarial sample image corresponding to the sampled sample image, a class prediction result obtained by performing class prediction on the adversarial sample image using the image recognition model being the wrong class label

S103

FIG. 3

Second class label

First class label

## FIG. 4

Second class label

First class label

## FIG. 5

Second class label

First class label

FIG. 6

Obtain A sample image sets and an image recognition model, A being a positive integer greater than 1, each of the A sample image sets corresponding to one of A different class labels, the image recognition model being obtained through pre-training based on the A sample image sets, and the A class labels including a wrong class label — S201

Obtain a sampled sample image from the A sample image sets, and input the sampled sample image and the wrong class label into the image recognition model, to generate a first probability vector of the sampled sample image for the A class labels, the wrong class label being different from a class label corresponding to a sample image set to which the sampled sample image belongs, the first probability vector including A probability elements, each of the A probability elements indicating one of the A class labels, and one probability element being used to represent a probability that the sampled sample image belongs to a class label indicated by the probability element — S202

Obtain, from the A probability elements in the first probability vector, a first probability element indicating the wrong class label, and adjust the sampled sample image based on the first probability element, to obtain an adversarial sample image corresponding to the sampled sample image, a class prediction result obtained by performing class prediction on the adversarial sample image using the image recognition model being the wrong class label — S203

Input the A sample image sets, the A class labels, a correct class label, and the adversarial sample image into the image recognition model, the correct class label being the class label corresponding to the sample image set to which the sampled sample image belongs — S204

Generate, using the image recognition model, first predicted classes respectively corresponding to the A sample image sets and a second predicted class corresponding to the adversarial sample image — S205

Generate a first loss value based on the first predicted classes and the A class labels, generate a second loss value based on the second predicted class and the correct class label, and adjust a parameter in the image recognition model based on the first loss value and the second loss value, to obtain an optimized image recognition model — S206

FIG. 7

Obtain a target image, and input the target image into an optimized image recognition model, the optimized image recognition model being obtained by continuing to perform optimization training on an image recognition model based on a mixed sample training set, the mixed sample training set including A sample image sets, A class labels, a correct class label, and an adversarial sample image, each of the A sample image sets corresponding to one of the A different class labels, the A sample image sets including a sampled sample image, the correct class label belonging to the A class labels, A being a positive integer greater than 1, the image recognition model being obtained through pre-training based on the A sample image sets, the adversarial sample image being obtained by adjusting the sampled sample image based on a first probability element, indicating a wrong class label, among A probability elements in a first probability vector, the first probability vector being generated for the sampled sample image using the image recognition model, the wrong class label being different from a class label corresponding to a sample image set to which the sampled sample image belongs, the correct class label being the class label corresponding to the sample image set to which the sampled sample image belongs, the first probability vector including the A probability elements, each of the A probability elements indicating one of the A class labels, one probability element being used to represent a probability that the sampled sample image belongs to a class label indicated by the probability element, and a class prediction result obtained by performing class prediction on the adversarial sample image using the image recognition model being the wrong class label

S301

Generate a target probability vector of the target image for the A class labels using the optimized image recognition model

S302

Determine a class label corresponding to a maximum probability element in the target probability vector as a class prediction result for the target image

S303

FIG. 8

FIG. 9

FIG. 10

FIG. 11

## INTERNATIONAL SEARCH REPORT

| International application No. |
|---|
| **PCT/CN2024/079587** |

### A. CLASSIFICATION OF SUBJECT MATTER

G06V10/764(2022.01)i

According to International Patent Classification (IPC) or to both national classification and IPC

### B. FIELDS SEARCHED

Minimum documentation searched (classification system followed by classification symbols)

IPC:G06V

Documentation searched other than minimum documentation to the extent that such documents are included in the fields searched

Electronic data base consulted during the international search (name of data base and, where practicable, search terms used)

CNABS, CNTXT, DWPI, ENTXTC, VEN, WPABSC, CNKI, ACM: 图像, 图片, 分类, 标签, 概率, 矩阵, 对抗, 反, 样本, 向量, picture, image, classification, label, probability, matrix, contrast, anti, sample, vector

### C. DOCUMENTS CONSIDERED TO BE RELEVANT

| Category* | Citation of document, with indication, where appropriate, of the relevant passages | Relevant to claim No. |
|---|---|---|
| PX | CN 116977692 A (TENCENT TECHNOLOGY (SHENZHEN) CO., LTD.) 31 October 2023 (2023-10-31) description, paragraphs 2-244 | 1-16 |
| A | EP 4075395 A2 (BEIJING BAIDU NETCOM SCIENCE & TECHNOLOGY CO., LTD.) 19 October 2022 (2022-10-19) description, pages 1-13 | 1-16 |
| A | CN 111046380 A (ALIPAY (HANGZHOU) INFORMATION TECHNOLOGY CO., LTD.) 21 April 2020 (2020-04-21) entire document | 1-16 |
| A | CN 110210617 A (BEIJING UNIVERSITY OF POSTS AND TELECOMMUNICATIONS) 06 September 2019 (2019-09-06) entire document | 1-16 |
| A | CN 113569611 A (TENCENT TECHNOLOGY (SHENZHEN) CO., LTD.) 29 October 2021 (2021-10-29) entire document | 1-16 |

☑ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **11 May 2024** | **28 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/079587** |

**C.     DOCUMENTS CONSIDERED TO BE RELEVANT**

| Category* | Citation of document, with indication, where appropriate, of the relevant passages | Relevant to claim No. |
| --- | --- | --- |
| A | WO 2021189364 A1 (SHENZHEN INSTITUTE OF ADVANCED TECHNOLOGY) 30 September 2021 (2021-09-30)<br>entire document | 1-16 |
| A | US 2023022943 A1 (XIDIAN UNIVERSITY) 26 January 2023 (2023-01-26)<br>entire document | 1-16 |

Form PCT/ISA/210 (second sheet) (July 2022)

## INTERNATIONAL SEARCH REPORT
**Information on patent family members**

International application No.

**PCT/CN2024/079587**

| Patent document cited in search report | | | Publication date (day/month/year) | Patent family member(s) | | | Publication date (day/month/year) |
|---|---|---|---|---|---|---|---|
| CN | 116977692 | A | 31 October 2023 | None | | | |
| EP | 4075395 | A2 | 19 October 2022 | EP | 4075395 | A3 | 22 February 2023 |
| | | | | KR | 20220107120 | A | 02 August 2022 |
| | | | | JP | 2022141931 | A | 29 September 2022 |
| | | | | JP | 7414901 | B2 | 16 January 2024 |
| | | | | CN | 113705425 | A | 26 November 2021 |
| | | | | CN | 113705425 | B | 16 August 2022 |
| CN | 111046380 | A | 21 April 2020 | HK | 40028423 | A0 | 05 February 2021 |
| | | | | HK | 40028423 | A1 | 02 June 2022 |
| | | | | CN | 111046380 | B | 15 February 2022 |
| CN | 110210617 | A | 06 September 2019 | CN | 110210617 | B | 18 June 2021 |
| CN | 113569611 | A | 29 October 2021 | HK | 40054013 | A0 | 18 February 2022 |
| WO | 2021189364 | A1 | 30 September 2021 | US | 2022092336 | A1 | 24 March 2022 |
| | | | | AU | 2020437435 | A1 | 06 January 2022 |
| | | | | AU | 2020437435 | B2 | 20 July 2023 |
| | | | | GB | 2607647 | A | 14 December 2022 |
| | | | | CN | 111475797 | A | 31 July 2020 |
| | | | | CN | 111475797 | B | 29 September 2023 |
| US | 2023022943 | A1 | 26 January 2023 | CN | 113554089 | A | 26 October 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310237098